# EUROPÄISCHE PATENTSCHRIFT

(11) **EP 3 740 443 B1**
(45) Veröffentlichungstag und Bekanntmachung des Hinweises auf die Patenterteilung: **02.07.2025**
(21) Anmeldenummer: 19706856.2
(22) Anmeldetag: 15.01.2019
(51) Int. Cl.: B65G 1/137, G06Q 10/08

(54) **VERFAHREN UND KOMMISSIONIERSYSTEM MIT VERBESSERTEM BETRIEB AUTONOMER FÖRDERFAHRZEUGE**
METHOD AND PICKING SYSTEM WITH IMPROVED OPERATION OF AUTONOMOUS CONVEYING VEHICLES
PROCÉDÉ ET SYSTÈME DE PRÉPARATION DE COMMANDES PRÉSENTANT UN FONCTIONNEMENT AMÉLIORÉ DE VÉHICULES DE MANUTENTION AUTONOMES

(30) Priorität: 18.01.2018 AT 500392018
(43) Veröffentlichungstag der Anmeldung: 25.11.2020
(73) Patentinhaber: TGW Logistics GmbH, 4614 Marchtrenk (AT)
(72) Erfinder: SCHEDLBAUER, Michael, 94491 Hengersberg (DE); SCHMIDBERGER, Andreas, 4600 Wels (AT); SIKET, Christian Michael, 4040 Linz (AT); SCHRÖPF, Harald, 4600 Wels (AT)
(74) Vertreter: Burger, Hannes
(86) Internationale Anmeldenummer: PCT/AT2019/060013
(87) Internationale Veröffentlichungsnummer: WO 2019/140471

(56) Entgegenhaltungen:
- DE-A1- 102011 050 437
- DE-A1- 102015 114 410
- FR-A1- 2 840 283
- US-B1- 9 733 646

## Beschreibung

Die Erfindung betrifft ein Verfahren zum Betrieb eines Kommissioniersystems zum Kommissionieren von Waren, wobei die Waren von einem Warenübernahmebereich, insbesondere einem Wareneingang, zu einem Lagerbereich transportiert werden und durch eine Einlagerfördertechnik in diesem Lagerbereich eingelagert werden, wobei der Lagerbereich eine Vielzahl an Lagerplätzen zum Lagern der Waren aufweist. Weiterhin wird ein Kommissionierauftrag erfasst, und es werden Auftragswaren bestimmt, welche für den Kommissionierauftrag benötigt werden. Danach werden die Auftragswaren aus dem Lagerbereich ausgelagert und durch eine Auslagerfördertechnik vom Lagerbereich zu einem Warenübergabebereich, insbesondere einem Warenausgang, transportiert. Der Transport der Waren mittels der Einlagerfördertechnik und/oder der Transport der Auftragswaren mittels der Auslagerfördertechnik wird zumindest teilweise durch eine Vielzahl an autonomen Förderfahrzeugen durchgeführt, welche auf einer, in mehrere Fahrflächen-Segmente unterteilten, Fahrfläche fahren. Die Fahrbewegungen in den Fahrflächen-Segmenten werden jeweils überwiegend von einer geschlossenen Gruppe an autonomen Förderfahrzeugen durchgeführt. Die Fahrbewegungen in zumindest einem Fahrflächen-Segment werden dabei von einer Steuerung koordiniert.

Weiterhin betrifft die Erfindung ein Kommissioniersystem zum Kommissionieren von Waren, umfassend einen Warenübernahmebereich, insbesondere einen Wareneingang, und einen Warenübergabebereich, insbesondere einen Warenausgang. Außerdem umfasst das Kommissioniersystem einen Lagerbereich mit einer Vielzahl an Lagerplätzen zum Lagern der Waren, sowie eine den Warenübernahmebereich und den Lagerbereich verbindende Einlagerfördertechnik, welche zum Transportieren der Waren vom Warenübernahmebereich zum Lagerbereich und zum Einlagern der Waren in den Lagerbereich ausgebildet ist. Weiterhin umfasst das Kommissioniersystem einen Auftragsrechner zum Erfassen eines Kommissionierauftrags und zum Bestimmen von Auftragswaren, welche für den Kommissionierauftrag benötigt werden. Darüber hinaus weist das Kommissioniersystem eine den Lagerbereich und den Warenübergabebereich verbindende Auslagerfördertechnik auf, welche zum Auslagern der Auftragswaren aus dem Lagerbereich und zum Transportieren der Auftragswaren vom Lagerbereich zum Warenübergabebereich ausgebildet ist. Die Einlagerfördertechnik und/oder die Auslagerfördertechnik weist dabei eine Vielzahl an autonomen Förderfahrzeugen zum Transport der Waren/ Auftragswaren auf einer Fahrfläche auf. Zudem ist die Fahrfläche in mehrere Fahrflächen-Segmente unterteilt, und es ist eine Steuerung vorgesehen, welche zur Koordinierung der Fahrbewegungen in zumindest einem Fahrflächen-Segment eingerichtet ist. Die Fahrbewegungen in den Fahrflächen-Segmenten werden dabei jeweils überwiegend von einer geschlossenen Gruppe an autonomen Förderfahrzeugen durchgeführt.

Ein Verfahren und ein Kommissioniersystem der genannten Art sind beispielweise aus der DE 10 2015 114 410 A1 oder der DE 10 2011 050 437 A1 bekannt.

Beispielsweise offenbart die DE 10 2014 111 385 A1 dazu ein Lager- und Kommissioniersystem mit einer Regalanordnung, die eine Vielzahl von Regalen und eine Vielzahl von Vertikalförderern aufweist. Ferner ist mindestens eine Flotte von autonom verfahrbaren, fahrerlosen Transportfahrzeugen und eine für diese Transportfahrzeuge bestimmte Fahrfläche vorgesehen, die im Wesentlichen barrierefrei, insbesondere frei von Regalplätzen, ist und die sich unter der, über der oder durch die Regalanordnung erstreckt. Die genannte Ebene ist fördertechnisch über die Vertikalförderer an die Regalanordnung gekoppelt ist. Die Transportfahrzeuge fahren auf der Fahrfläche von einem Wegpunkt zum nächsten. Ein Flottenmanager ist zum Erzeugen und Ausgeben von Fahraufträgen für die Transportfahrzeuge eingerichtet, um die von den Vertikalförderern auf die Fahrebene transportierten Lagergüter entlang von individuellen Fahrwegen von und zu den Vertikalförderern zu transportieren und in der absoluten Reihenfolge zu übergeben.

Nachteilig an dem bekannten System ist, dass die Fahrbewegungen, insbesondere bei hoher Verkehrsdichte, schwer plan- und koordinierbar sind. Zudem ist das genannte System ineffizient, und Leistungsanpassungen nach oben oder unten sind mit dem bekannten System ebenfalls nur auf ineffiziente Weise möglich.

Eine Aufgabe der Erfindung ist es daher, ein verbessertes Kommissioniersystem und ein verbessertes Verfahren zum Betrieb eines solchen Kommissioniersystems anzugeben. Insbesondere sollen die oben angegebenen Nachteile überwunden werden.

Die Aufgabe der Erfindung wird mit einem Verfahren der eingangs genannten Art gelöst, bei dem in einer Gruppe nicht benötigte autonome Förderfahrzeuge im Zuge eines Austauschs von autonomen Förderfahrzeugen einer anderen Gruppe zur Verfügung gestellt werden, in der ein Engpass an autonomen Förderfahrzeugen herrscht, wobei der Austausch an autonomen Förderfahrzeugen zwischen zwei verschiedenen Fahrflächen-Segmenten maximal 10%, vorteilhaft maximal 5%, der auf der Fahrfläche durchgeführten Fahrten betrifft und wobei der Austausch von autonomen Förderfahrzeugen über Verbindungswege zwischen den Fahrflächen-Segmenten stattfindet.

Die Aufgabe der Erfindung wird auch mit einem Kommissioniersystem der eingangs genannten Art gelöst, bei dem in einer Gruppe nicht benötigte autonome Förderfahrzeuge im Zuge eines Austauschs von autonomen Förderfahrzeugen einer anderen Gruppe zur Verfügung gestellt werden, in der ein Engpass an autonomen Förderfahrzeugen herrscht, wobei der Austausch an autonomen Förderfahrzeugen zwischen zwei verschiedenen Fahrflächen-Segmenten maximal 10%, vorteilhaft maximal 5%, der auf der Fahrfläche durchgeführten Fahrten betrifft und wobei der Austausch von autonomen Förderfahrzeugen über Verbindungswege zwischen den Fahrflächen-Segmenten stattfindet.

Mit anderen Worten werden die Fahrbewegungen in Fahrflächen-Segmenten, welche die Fahrfläche unterteilen, jeweils zumindest zu 90% (vorteilhaft 95%) von einer geschlossenen Gruppe an autonomen Förderfahrzeugen durchgeführt.

Durch die vorgeschlagenen Maßnahmen sind die Fahrbewegungen trotz hoher Verkehrsdichte gut plan- und koordinierbar. Ein Austausch von autonomen Förderfahrzeugen zwischen verschiedenen Gruppen kann in geringem Maße ermöglicht sein, konkret durch Verbindungswege zwischen den Fahrflächen-Segmenten. Dies ermöglicht die einfache Anpassung an Leistungsanforderungen, in dem in einer Gruppe nicht benötigte autonome Förderfahrzeuge einer anderen Gruppe zur Verfügung gestellt werden, in der ein (temporärer) Engpass an autonomen Förderfahrzeugen herrscht.

Unter "autonomen Förderfahrzeugen" sind im Rahmen der Erfindung selbstfahrende beziehungsweise fahrerlose Förderfahrzeuge zum Warentransport zu verstehen, welche entlang fix vorgegebener Spuren fahren oder welche frei geführt sind, also ohne fixer Spurführung. Eine fixe Spurführung kann am Boden der Fahrfläche vorgegeben sein, etwa mit Hilfe von optischen Farbstreifen, mit magnetischen Streifen oder auch mit Markierungs-Tags. Schienengebundene Fahrzeuge zählen im Rahmen der Erfindung nicht zu autonomen Förderfahrzeugen mit fixer Spurführung. Eine in einer Software vorgegebene und niemals veränderte Spurführung in einer Fahrfläche ohne hardwaremäßig vorgegebener Spurführung (also ohne z.B. Farbmarkierungen am Boden der Fahrfläche) stellt einen Grenz- beziehungsweise Mischfall dar und kann sowohl der freien Spurführung als auch der fixen Spurführung zugerechnet werden. Ein autonomes Förderfahrzeug weist insbesondere eine Transportplattform auf, auf der die zu transportierenden Waren/Auftragswaren temporär aufgenommen werden. Beispielsweise kann die Transportplattform eine fixe ebene Fläche am autonomen Förderfahrzeug sein, die Transportplattform kann aber auch vertikal und/oder seitlich relativ zu einem Fahrgestell des autonomen Förderfahrzeugs beweglich sein, um beispielsweise Waren/Auftragswaren in ein Lagerregal einlagern und aus dem Lagerregal auslagern zu können. Am Fahrgestell sind Räder angeordnet, von denen wenigstens eines angetrieben ist. Wenigstens eines der Räder ist lenkbar, sofern das autonome Förderfahrzeug nicht über Räder verfügt, mit denen auch eine Seitwärtsbewegung ausgeführt werden kann (z.B. Mecanum-Räder). Weiterhin umfasst ein autonomes Förderfahrzeug auch eine elektronische Steuerung zum Empfang von Befehlen von einer übergeordneten Steuerung und zum Steuern/Regeln der Bewegungen des autonomen Förderfahrzeugs. Schließlich umfasst ein autonomes Förderfahrzeug Sensoren zum Erfassen der Umgebung des autonomen Förderfahrzeugs und zur Orientierung im Raum.

Ein "Lagerplatz" ist ein Bereich des Kommissioniersystems an dem eine Ware abgestellt und gelagert werden kann. Ein "Lagerbereich" ist ein Bereich des Kommissioniersystems, welcher eine Vielzahl an Lagerplätzen zum Lagern der Waren aufweist. Beispielsweise kann der Lagerbereich als Lagerregal ausgebildet sein, das eine Vielzahl an Lagerplätzen nebeneinander und übereinander bereitstellt. Denkbar ist aber auch, dass der Lagerbereich ein Bereich am Boden des Kommissioniersystems ist, der für das Abstellen und Lagern einer Ware vorgesehen beziehungsweise reserviert ist. Geh- und Fahrbereiche sind demnach keine Lagerbereiche, können aber an diese anschließen.

Unter einem "Warenübernahmebereich" ist jener Bereich zu verstehen, in dem dem Kommissioniersystem Waren zugeführt werden, also insbesondere ein Wareneingang. Im Speziellen können angelieferte Warenträger (z.B. Paletten, Kartons, etc.) manuell oder automatisiert vereinzelt werden. Man spricht bei diesem Vorgang auch von "Depalettieren".

Unter einem "Warenübergabebereich" ist jener Bereich zu verstehen, in dem Waren aus dem Kommissioniersystem abgeführt werden, also insbesondere ein Warenausgang. Im Speziellen können Waren auf bereitgestellten Warenträgern (z.B. Paletten, Kartons, etc.) gemäß einem Kommissionierauftrag manuell oder automatisiert zusammengestellt beziehungsweise kommissioniert werden. Man spricht bei diesem Vorgang im auch von "Palettieren".

Angemerkt wird, dass weder der "Warenübernahmebereich" noch der "Warenübergabebereich" an einer physischen Außengrenze des Kommissioniersystems (etwa im Sinne eines Tors) angeordnet sein müssen, sondern auch im Inneren des Kommissioniersystems positioniert sein können. Der Warenübernahmebereich und der Warenübergabebereich bilden jedoch insbesondere funktionale Grenzen des Kommissioniersystems. Das heißt, an einem Warenübernahmebereich wird ein angeliefertes Warenpaket (z.B. eine beladene Palette) in die Prozessabläufe des Kommissioniersystems eingegliedert. An einem Warenübergabebereich wird dementsprechend ein abzutransportierendes Warenpaket aus den Prozessabläufen des Kommissioniersystems ausgegliedert.

"Waren" sind allgemein Objekte des Warenhandels und werden am Warenübernahmebereich angeliefert und am Warenübergabebereich gemäß einem Auftrag zu einem Kunden abtransportiert. Waren, die zu einem Auftrag zugeordnet sind, werden im Rahmen der Erfindung als "Auftragswaren" bezeichnet. Die Zuordnung zu einem Auftrag kann für bereits gelagerte Waren erfolgen oder im Prinzip auch schon davor. Insbesondere kann die Auftragsware in diesem Fall von einem Warenübernahmebereich zu einem Warenübergabebereich durchgereicht werden. Solche Auftragswaren werden auch als "Cross-Docking-Waren" bezeichnet. Häufig sind Cross-Docking-Waren auf Paletten gelagert, die kurzzeitig in einem Lagerbereich abgestellt werden und im Wesentlichen unverändert (das heißt, ohne depalettiert zu werden) ausgeliefert werden. Häufig umfasst ein Kundenauftrag sowohl Cross-Docking-Waren als auch einzeln kommissionierte Waren, also Waren, die im Kommissioniersystem depalettiert oder bereits vereinzelt angeliefert werden und die individuell zu einem Auftrag hinzugefügt werden.

Charakteristische Kennwerte, bei welchen der Vorteil einer Segmentierung der Fahrfläche gut erkennbar wird, sind unter anderem
die Fahrzeugdichte der autonomen Förderfahrzeuge auf der Fahrfläche,
die maximale/mittlere Fahrzeuggeschwindigkeit der autonomen Förderfahrzeuge auf der Fahrfläche,
die Kollisionsrate der autonomen Förderfahrzeuge auf der Fahrfläche, und
die Kollisionswahrscheinlichkeit der autonomen Förderfahrzeuge auf der Fahrfläche.

Die "Fahrzeugdichte" ρ_{FZ} gibt im Rahmen der Erfindung die Anzahl an autonomen Förderfahrzeugen n_{FZ} bezogen auf die Größe der Fahrfläche A_{F} an.

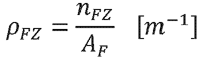

Die "Kollisionsrate" δ_{K} gibt im Rahmen der Erfindung die Anzahl an Kollisionen n_{K} zwischen autonomen Förderfahrzeugen pro Zeiteinheit t an, wenn diese ohne Eingriff einer Steuerung zur Kollisionsvermeidung mit der maximalen Geschwindigkeit auf dem kürzesten Weg von einem durch das Kommissionierverfahren vorgegebenen Startpunkt zu einem durch das Kommissionierverfahren vorgegebenen Zielpunkt fahren, also zum Beispiel eine Auftragsware vom Lagerbereich zum Warenübergabebereich befördern. Einen Maximalwert erreicht die Kollisionsrate, wenn alle autonomen Förderfahrzeuge ständig in Bewegung sind und nur kurz am jeweiligen Zielpunkt anhalten. Die Kollisionsrate δ_{K} steigt mit der Fahrzeugdichte und der Fahrzeuggeschwindigkeit an.

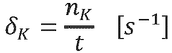

Die "Kollisionswahrscheinlichkeit" P_{K} gibt im Rahmen der Erfindung die Wahrscheinlichkeit dafür an, dass es auf der Fahrfläche zu Kollisionen zwischen autonomen Förderfahrzeugen kommt, wenn diese ohne Eingriff einer Steuerung zur Kollisionsvermeidung mit der maximalen Geschwindigkeit auf dem kürzesten Weg von einem durch das Kommissionierverfahren vorgegebenen Startpunkt zu einem durch das Kommissionierverfahren vorgegebenen Zielpunkt fahren. Die Kollisionswahrscheinlichkeit P_{K} ist durch das Verhältnis zwischen der Anzahl an Kollisionen n_{K} zwischen autonomen Förderfahrzeugen und der Anzahl aller im selben Bezugszeitraum auf der Fahrfläche durchgeführten Fahrten autonomer Förderfahrzeuge n_{G} definiert. Die Kollisionswahrscheinlichkeit P_{K} kann demnach Werte zwischen 0 und 1 annehmen und steigt mit der Fahrzeugdichte an.

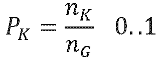

Durch die Segmentierung der Fahrfläche werden die Kollisionsrate δ_{K} und die Kollisionswahrscheinlichkeit P_{K} bei gleicher Fahrzeugdichte ρ_{FZ} und Fahrzeuggeschwindigkeit gegenüber Kommissioniersystemen mit unsegmentierter Fahrfläche reduziert. Damit sinkt nicht nur die Kollisionsrate δ_{K} und die Kollisionswahrscheinlichkeit P_{K} an sich, sondern auch der Steuerungsaufwand zur Vermeidung von Kollisionen. Wird die Kollisionsvermeidung (auch) im autonomen Förderfahrzeug durchgeführt, dann kann das autonome Fahrzeug bei segmentierter Fahrfläche daher einfacher aufgebaut sein als bei unsegmentierter Fahrfläche.

Generell tritt der Vorteil der Segmentierung der Fahrfläche dann besonders hervor, wenn sich die autonomen Förderfahrzeuge chaotisch beziehungsweise völlig frei bewegen können und nicht koordiniert auf vorgegebenen Wegen fahren. Die Kollisionsrate und die Kollisionswahrscheinlichkeit steigen dann stark an.

Zu dem Gesagten ist anzumerken, dass die Kollisionsrate und die Kollisionswahrscheinlichkeit auf Basis eines fiktiven Betriebszustands angegeben sind, der in der Realität normalerweise nicht vorkommt, da Regeleingriffe diese Kollisionen verhindern. Ein Regeleingriff zur Kollisionsvermeidung wird in aller Regel dann vorgenommen, wenn eine Kollision droht beziehungsweise ein autonomes Förderfahrzeug ein anderes behindert. In diesem Sinne kann die "Kollisionsrate" auch als "Behinderungsrate" oder "Regelrate" aufgefasst werden und die "Kollisionswahrscheinlichkeit" als "Behinderungswahrscheinlichkeit" oder "Regelwahrscheinlichkeit". Regeleingriffe zur Kollisionsvermeidung können generell von einer übergeordneten Steuerung und/oder autonom vom Fahrzeug selbst vorgenommen werden. Die dafür benötigte Sensorik und die dabei angewandte Methodik sind aus dem Stand der Technik grundsätzlich bekannt und werden an dieser Stelle daher nicht im Detail ausgeführt.

Obwohl der oben angeführte Betriebszustand fiktiv ist, ist er dennoch gut geeignet, um die der Erfindung zugrunde liegenden Problematik darzulegen. Die oben angegebene Kollisionsrate und Kollisionswahrscheinlichkeit kann nämlich vergleichsweise einfach berechnet beziehungsweise simuliert werden, da komplizierte Regeleingriffe dort nicht berücksichtigt werden müssen. Im Grunde muss die Interaktion zwischen im Wesentlichen geradlinig und mit konstanter Geschwindigkeit bewegten, "unintelligenten", autonomen Förderfahrzeugen betrachtet werden. Der genannten Simulation wird der Grundriss der Fahrfläche zugrundegelegt, sowie die Positionen der Start- und Zielpunkte der Förderfahrzeuge, die Transferpunkte zu einem anderen Teil des Kommissioniersystems darstellen, konkret zu einer ortsfesten Fördertechnik wie Förderbändern, Rollenförderern, Hebern und dergleichen oder aber auch zu einem Lagerbereich. Eine Berücksichtigung der Regeleingriffe zur Kollisionsvermeidung ist zwar auch in einer Simulation prinzipiell möglich, führt aber zu ungleich komplexeren Algorithmen.

Die oben genannten Start- und Zielpunkte bilden allgemein auf der Fahrfläche liegende "Transferpunkte", welche zum einen Schnittstellen zwischen den autonomen Förderfahrzeugen zu einer ortsfesten Fördertechnik (z.B. zu einem Förderband, einem Rollenförderer, einem Heber, einem Paternoster, etc.) darstellen, an denen Waren/Auftragswaren von den autonomen Förderfahrzeugen an die ortsfeste Fördertechnik übergeben werden oder umgekehrt. Transferpunkte können zum anderen aber auch durch Schnittstellen zu Lagerbereichen gebildet sein, an denen Waren/Auftragswaren von den autonomen Förderfahrzeugen ein- oder ausgelagert werden. Die Transferpunkte sind insbesondere Teil der Einlagerfördertechnik und/oder Auslagerfördertechnik beziehungsweise im Verlauf der Einlagerfördertechnik und/oder Auslagerfördertechnik angeordnet. Die Transferpunkte bilden zudem jene Punkte auf der Fahrfläche, welche die autonomen Förderfahrzeuge ihrer Bestimmung folgend zwangsläufig anfahren. Daher kommt es insbesondere an diesen Transferpunkten beziehungsweise in Transferbereichen, welche diese Transferpunkte umgeben, zu Häufungen von autonomen Förderfahrzeugen beziehungsweise zu hoher Fahrzeugdichte. Dementsprechend ist auch die "Kollisionsrate / Behinderungsrate / Regelrate" und die "Kollisionswahrscheinlichkeit / Behinderungswahrscheinlichkeit / Regelwahrscheinlichkeit" dort vergleichsweise hoch.

Dem "Transferbereich" steht der "Fahrbereich" gegenüber, in dem kein Transfer zwischen autonomen Förderfahrzeugen und einer ortsfesten Fördertechnik oder zwischen autonomen Förderfahrzeugen und einem Lagerbereich möglich ist. Insbesondere bei freier Spurführung ist die Fahrzeugdichte dort geringer, weil nicht jedes autonome Förderfahrzeug einen speziellen Teil des Förderbereichs befahren muss (es sei denn, es liegt eine Engstelle im Fahrbereich vor). Dementsprechend ist die "Kollisionsrate / Behinderungsrate / Regelrate" und die "Kollisionswahrscheinlichkeit / Behinderungswahrscheinlichkeit / Regelwahrscheinlichkeit" dort in aller Regel geringer als in den Transferbereichen respektive an den Transferpunkten.

Die Grenzen zwischen einem Transferbereich und einem Fahrbereich sind in der Regel fließend, und es kommt nicht zu einer plötzlichen Änderung der Fahrzeugdichte, sondern zu einer graduellen Änderung.

"Ortsfeste Fördertechnik" benötigt zum Warentransport fix verbaute Einrichtungen. Beispielsweise benötigt ein Heber einen Rahmen, in dem eine Hubplattform bewegt wird. Die Hubplattform alleine ist dagegen nicht funktionsfähig. Ortsfeste Fördertechnik ist insbesondere dadurch gekennzeichnet, dass sie ohne das Lösen von Befestigungen nicht aus dem Kommissioniersystem entfernt werden kann. Ein autonomes Förderfahrzeug kann dagegen ohne das Lösen von Befestigungen aus dem Kommissioniersystem entfernt werden.

Neben der guten Planbarkeit und Koordinierung der Fahrbewegungen liegt ein besonderer Vorteil der Segmentierung der Fahrfläche auch darin, dass der Normalbetrieb bei einer Störung von bestimmten Fahrflächen-Segmenten in jenen Fahrflächen-Segmenten aufrechterhalten werden kann, in denen keine Störung vorliegt. "Normalbetrieb" bedeutet in dem gegebenen Zusammenhang, dass ein Fahrflächen-Segment bestimmungsgemäß betrieben und ein Kommissionierverfahren störungsfrei ausgeführt wird. Liegt eine Störung vor, so kann das Kommissionierverfahren im betreffenden Fahrflächen-Segment nicht oder nur zu einem geringeren Grad ausgeführt werden.

Im Störfall oder Wartungsfall kann der Zugang für Personen zu Fahrflächen-Segmenten, zu denen der Zugang im Normalbetrieb gesperrt ist, freigegeben werden, beispielsweise um die Behebung der Störung beziehungsweise Wartung des Kommissioniersystems zu ermöglichen. In diesem Fall können besondere Maßnahmen zum Schutz der in dem betreffenden Fahrsegment befindlichen Personen getroffen werden. Beispielsweise kann die Fahrgeschwindigkeit der autonomen Förderfahrzeuge gegenüber dem Normalbetrieb verringert werden. Die autonomen Förderfahrzeuge können aus diesem Grund auch überhaupt stillgesetzt werden. Der Normalbetrieb kann dagegen in jenen Fahrflächen-Segmenten aufrechterhalten werden, in denen keine Störung vorliegt. Durch die Segmentierung wirkt sich eine Reduktion der Fahrgeschwindigkeit der autonomen Förderfahrzeuge oder eine Stillsetzung derselben weit weniger auf die Gesamtleistung des Kommissioniersystems im Störfall aus, als dies bei einer unsegmentierten Fahrfläche der Fall ist, wie sie im Stand der Technik verwendet wird. Eine Stillsetzung der autonomen Förderfahrzeuge zum Schutz der auf der Fahrfläche befindlichen Personen kommt im Stand der Technik ja einem Totalausfall des Kommissioniersystems gleich.

Der Normalbetrieb kann zudem durch eine Änderung des Betriebsmodus des Kommissioniersystems unterbrochen werden. Beispielsweise können für das Kommissioniersystem mehrere Leistungsstufen vorgesehen sein, zwischen denen umgeschaltet werden kann, um das Kommissioniersystem an unterschiedliche Leistungsanforderungen anzupassen. So ist die Leistungsanforderung an ein Kommissioniersystem in der Regel saisonalen Schwankungen unterworfen. Häufig wird ein Kommissioniersystem daher beispielsweise zur Weihnachtszeit mit hoher Leistung betrieben, in der Urlaubszeit dagegen mit geringerer Leistung. Die Umschaltungen zwischen den Betriebsmodi können aber auch mit häufigerer Frequenz durchgeführt werden, etwa beim Schichtwechsel. Beispielsweise kann vorgesehen sein, das Kommissioniersystem in der Nacht mit geringerer Leistung zu betreiben als tagsüber.

Die Leistungsanpassung beziehungsweise der Wechsel des Betriebsmodus kann mit der temporären Stilllegung beziehungsweise temporären Inbetriebnahme von Teilen des Kommissioniersystems verbunden sein, insbesondere mit der temporären Stilllegung beziehungsweise temporären Inbetriebnahme von Fahrflächen-Segmenten. Dadurch wird erreicht, dass eine Anpassung des Kommissioniersystems auf geringere Systemleistung nicht mit einer Senkung der Effizienz, mit der das Kommissioniersystem betrieben wird, verbunden ist, sondern das Kommissioniersystem auch bei geringerer Systemleistung mit hoher Effizienz betrieben werden kann. Das heißt, dass Fahrflächen-Segmente vorteilhaft entsprechend einem Leistungsbedarf an das Kommissioniersystem stillgelegt oder in Betrieb genommen werden.

Für die Reduktion der Systemleistung auf 20% der Maximalleistung werden in einem illustrativen Beispiel vier von fünf Fahrflächen-Segmenten abgeschaltet. Dies ist deutlich effizienter, als eine einzige und unsegmentierte Fahrfläche mit bloß 20% zu betreiben. In ersterem Fall können nämlich auch nebengeordnete Energieverbraucher, wie zum Beispiel eine Heizung/Kühlung, eine Beleuchtung und dergleichen deaktiviert werden, was bei der unsegmentierten Fahrfläche nicht möglich ist. Das heißt, nebengeordnete Energieverbraucher müssen in der Regel auch bei reduzierter Systemleistung auf der Fahrfläche mit voller Leistung weiterbetrieben werden. Während bei der segmentierten Fahrfläche im obigen Beispiel für die nebengeordneten Energieverbraucher bloß ein Leistungsbedarf von 20% gegenüber der Maximalleistung besteht, fallen bei der unsegmentierten Fahrfläche nach dem Stand der Technik 100% der Maximalleistung an. Die erfindungsgemäßen Maßnahmen sind also insbesondere auch dann von Vorteil, wenn das Kommissioniersystem nicht ständig mit der Maximalleistung betrieben wird, sondern es auch Phasen mit geringerer Leistung gibt.

Denkbar ist weiterhin, dass eine zu der Fahrfläche hin oder eine von der Fahrfläche weg führende, ortsfeste Fördertechnik (beispielsweise Förderbänder, Rollenförderer, Heber, Paternoster und dergleichen) nur jene Fahrflächen-Segmente versorgt, die aufgrund des momentanen Leistungsbedarfs tatsächlich auch betrieben werden. Dabei ist es von Vorteil, wenn weiter weg liegende Fahrflächen-Segmente zuerst deaktiviert werden. Daraus resultiert nicht nur eine Energieeinsparung für die genannte, zu der Fahrfläche hin oder von der Fahrfläche weg führende, ortsfeste Fördertechnik, sondern auch eine Wegeinsparung und damit eine Zeit-Einsparung beim Warentransport selbst. Das heißt, Waren/Auftragswaren werden von der zu der Fahrfläche hin oder von der Fahrfläche weg führenden, ortsfesten Fördertechnik nicht unnötig weit und auch nicht unnötig lange transportiert. Auch dies ist bei der unsegmentierten Fahrfläche aus dem Stand der Technik nicht ohne weiteres möglich. Die Segmentierung der Fahrfläche führt daher im Teillastbereich auch zu höherer Effizienz im Hinblick auf den von den Waren/Auftragswaren zurückgelegten Weg und die Zeit, die für diesen Weg nötig ist.

Demgemäß ist es von Vorteil, wenn
ein erstes Fahrflächen-Segment vor einem zweiten Fahrflächen-Segment außer Betrieb genommen wird, wenn ein zwischen einem Lagerplatz und einem Transferpunkt im ersten Fahrflächen-Segment verlaufender Transportweg auf einer ortsfesten Fördertechnik länger ist als ein zwischen diesem Lagerplatz und einem Transferpunkt im zweiten Fahrflächen-Segment verlaufender Transportweg auf der ortsfesten Fördertechnik, und/oder
ein erstes Fahrflächen-Segment nach einem zweiten Fahrflächen-Segment in Betrieb genommen wird, wenn ein zwischen einem Lagerplatz und einem Transferpunkt im ersten Fahrflächen-Segment verlaufender Transportweg auf einer ortsfesten Fördertechnik länger ist als ein zwischen diesem Lagerplatz und einem Transferpunkt im zweiten Fahrflächen-Segment verlaufender Transportweg auf der ortsfesten Fördertechnik.

Insbesondere sind unter den genannten Wegen jeweils die kürzesten Transportwege zu verstehen. Darüber hinaus gelten die genannten Bedingungen insbesondere für jeden Lagerplatz im Kommissioniersystem. Die vorgesehenen Maßnahmen treten daher insbesondere dann in Kraft, wenn die kürzesten, zwischen allen Lagerplätzen und einem Transferpunkt im ersten Fahrflächen-Segment verlaufenden, Transportwege auf einer ortsfesten Fördertechnik länger sind als die kürzesten, zwischen diesem Lagerplätzen und einem Transferpunkt im zweiten Fahrflächen-Segment verlaufenden, Transportwege. Im Speziellen bei im Wesentlichen gleichwertigen Lösungen können die Fahrflächen-Segmente auch beliebig oder sogar zufällig außer oder in Betrieb genommen werden, insbesondere um eine gleichmäßige Abnutzung der autonomen Förderfahrzeuge zu erreichen.

Denkbar ist weiterhin, dass autonome Förderfahrzeuge von abgeschalteten Fahrflächen-Segmenten bei einem Wechsel des Betriebsmodus des Kommissioniersystems zumindest teilweise in den aktiv bleibenden Fahrflächen-Segmenten genutzt werden. Das heißt, zwischen den einzelnen Betriebsmodi ist ein Austausch an autonomen Förderfahrzeugen zwischen zwei verschiedenen Fahrflächen-Segmenten denkbar. Dadurch kann die Effizienz im Teillastbetrieb gegenüber dem Vollastbetrieb sogar gesteigert werden, wenn die autonomen Förderfahrzeuge eines stillgelegten Fahrflächen-Segments in einem aktiv bleibenden Fahrflächen-Segment "aushelfen" und das aktiv gebliebene Fahrflächen-Segment bei annähernd gleichem Energiebedarf höhere Kommissionierleistung erbringt. Weiterhin kann dadurch die Leistungsanpassung im Kommissioniersystem fein abgestuft erfolgen.

An dieser Stelle wird auch angemerkt, dass grundsätzlich mehrere Strategien zur Einlagerung von Waren denkbar sind. Insbesondere sind diese von Relevanz, wenn nicht jedes Fahrflächen-Segment über die Fördertechnik mit dem gesamten Lagerbereich verbunden ist, sondern nur mit einem Teil der im Kommissioniersystem vorhandenen Lagerbereiche. Ware kann nun so im Kommissioniersystem eingelagert werden, dass zwei Fahrflächen-Segmente über die Fördertechnik nur mit Lagerbereichen verbunden sind, in denen zumindest teilweise Waren unterschiedlicher Art gelagert werden. Das heißt, bestimmte Waren sind nur über ein erstes Fahrflächen-Segment zugänglich, nicht aber über ein zweites, und umgekehrt. Dies ist dann von Vorteil, wenn sehr viele unterschiedliche Waren im Kommissioniersystem gelagert werden. Denkbar ist aber auch, dass die Arten von Waren, die in einem über die Fördertechnik mit einem Fahrflächen-Segment verbundenen Lagerbereich gelagert werden, für alle Fahrflächen-Segmente gleich sind. Das heißt, alle Arten von Waren sind über alle Fahrflächen-Segmente zugänglich. Dies ist dann von Vorteil, wenn relativ wenige unterschiedliche Waren im Kommissioniersystem gelagert werden, da damit die Abläufe im Kommissioniersystem flexibler gestaltet werden können. Dies trifft insbesondere dann zu, wenn nur ein Teil der Fahrflächen-Segmente betrieben wird (z.B. im Teillastbereich oder im Fehlerfall). Diese Variante ist somit auch besonders ausfallsicher.

Günstig ist es, wenn in den Fahrflächen-Segmenten unterschiedliche Temperaturen herrschen. Beispielsweise können in einem ersten Fahrflächen-Segment Tiefkühlwaren und in einem zweiten Fahrflächen-Segment bei Raumtemperatur zu lagernde Waren/Auftragswaren bewegt werden.

Vorteilhaft ist es weiterhin, wenn in einem ersten Fahrflächen-Segment autonome Förderfahrzeuge einer ersten Bauart und in einem zweiten Fahrflächen-Segment autonome Förderfahrzeuge einer zweiten, anderen Bauart operieren. Zum Beispiel können die autonomen Förderfahrzeuge unterschiedlich große Transportplattformen aufweisen und/oder unterschiedliche Nutzlasten aufnehmen und/oder für unterschiedliche Temperaturbereiche ausgelegt sein. Zudem kann die Steuerelektronik der autonomen Förderfahrzeuge auf unterschiedliche Umgebungsverhältnisse (insbesondere Temperaturen) angepasst sein. Insbesondere können an unterschiedliche Temperaturen angepasste autonome Förderfahrzeuge in Fahrflächen-Segmenten fahren, in denen unterschiedliche Temperaturen herrschen.

Vorteilhaft ist es darüber hinaus, wenn in einem ersten Fahrflächen-Segment autonome Förderfahrzeuge mit einer ersten Maximal-Geschwindigkeit und in einem zweiten Fahrflächen-Segment autonome Förderfahrzeuge mit einer zweiten, anderen Maximal-Geschwindigkeit operieren. Auf diese Weise kann vermieden werden, dass langsame autonome Förderfahrzeuge schnellere autonome Förderfahrzeuge behindern.

Vorteilhaft ist es zudem, wenn ein erstes Fahrflächen-Segment im Normalbetrieb des Kommissioniersystems frei für den Zugang von Menschen ist und wenn ein zweites Fahrflächen-Segment im Normalbetrieb des Kommissioniersystems für den Zugang durch Menschen gesperrt ist. Beispielsweise können in dem für den Menschen gesperrtem Fahrflächen-Segment autonome Förderfahrzeuge unterwegs sein, die für den Menschen potentiell gefährlicher sind, als jene autonomen Förderfahrzeuge, die in dem für den Menschen offenen Fahrflächen-Segment unterwegs sind. Potentiell gefährlichere autonome Förderfahrzeuge sind zum Beispiel besonders schnell und/oder besonders schwer. Denkbar wäre auch, dass die in dem für den Menschen gesperrtem Fahrflächen-Segment operierenden autonomen Förderfahrzeuge hinsichtlich ihrer Sensorik weniger aufwändig ausgebaut sind als die in dem für den Menschen offenen Fahrflächen-Segment operierenden autonomen Förderfahrzeuge und daher Gefahren weniger gut und/oder weniger rasch erkennen. Die autonomen Förderfahrzeuge können hinsichtlich ihres Aufbaus also an unterschiedliche Sicherheitsanforderungen angepasst sein.

Für den Störfall gilt das bereits weiter oben Gesagte. Im Störfall oder Wartungsfall kann der Zugang für Personen zu Fahrflächen-Segmenten, zu denen der Zugang im Normalbetrieb gesperrt ist, freigegeben werden, beispielsweise um die Behebung der Störung beziehungsweise die Wartung des Kommissioniersystems zu ermöglichen. In diesem Fall können besondere Maßnahmen zum Schutz der in dem betreffenden Fahrsegment befindlichen Personen getroffen werden. Beispielsweise kann die Fahrgeschwindigkeit der autonomen Förderfahrzeuge gegenüber dem Normalbetrieb verringert werden. Die autonomen Förderfahrzeuge können aus diesem Grund auch überhaupt stillgesetzt werden.

Günstig ist es weiterhin, wenn die Waren in einem ersten Lagerbereich vereinzelt und in einem zweiten Lagerbereich in Gruppen, insbesondere auf Paletten, gelagert werden. Eine solche Vorgangsweise ist besonders dann vorteilhaft, wenn Aufträge (häufiger) auch Gruppen von Auftragswaren umfassen, insbesondere komplette Paletten dieser Auftragswaren. Eine Vereinzelung beziehungsweise Depalettierung der Waren am Warenübernahmebereich ist dann nur zum Teil sinnvoll. Stattdessen werden solche Auftragswaren direkt auf der Palette manipuliert.

Vorteilhaft ist es darüber hinaus, wenn die Waren/Auftragswaren durch die autonomen Förderfahrzeuge in einem Fahrflächen-Segment sowohl vereinzelt als auch in Gruppen, insbesondere auf Paletten, transportiert werden. Bei dieser Ausführungsvariante können in einem Fahrflächen-Segment sowohl einzelne Waren/Auftragswaren als auch (andere) in Gruppen vorliegende Waren/Auftragswaren zu einer Lieferung zusammengestellt werden. Beispielsweise kann ein Auftrag sowohl komplette Paletten einer ersten Auftragsware und ein Stück oder mehrere Stücke einer zweiten Auftragsware enthalten. Die vorgeschlagenen Maßnahmen ermöglichen die Zusammenstellung einer Lieferung in besonders flexibler Weise.

Vorteilhaft ist es aber auch, wenn die Waren/Auftragswaren durch die autonomen Förderfahrzeuge in einem ersten Fahrflächen-Segment nur vereinzelt und in einem zweiten Fahrflächen-Segment nur in Gruppen, insbesondere auf Paletten, transportiert werden. Bei dieser Ausführungsvariante werden einzelne Waren/Auftragswaren und (andere) in Gruppen vorliegende Waren/Auftragswaren in unterschiedlichen Fahrflächen-Segmenten zu einer Lieferung zusammengestellt. Die autonomen Förderfahrzeuge, welche Gruppen von Waren/Auftragswaren (insbesondere komplette Paletten) befördern, sind in aller Regel langsamer als autonome Förderfahrzeuge, welche für den Transport einzelner Waren/Auftragswaren ausgelegt sind. Durch die vorgeschlagenen Maßnahmen werden Behinderungen der schnelleren autonomen Förderfahrzeuge durch die langsameren autonomen Förderfahrzeuge vermieden.

Denkbar ist auch, dass die oben zur vereinzelten Ware angeführten Varianten auf kleine Gruppen von Waren angewandt werden. Demgemäß können die Waren/Auftragswaren durch die autonomen Förderfahrzeuge in einem Fahrflächen-Segment in verschieden großen Gruppen transportiert werden. Denkbar ist auch, dass die Waren/Auftragswaren durch die autonomen Förderfahrzeuge in einem ersten Fahrflächen-Segment in einer ersten Gruppengröße und in einem zweiten Fahrflächen-Segment in einer anderen Gruppengröße transportiert werden. Die Gruppengröße ist dabei durch die Anzahl der Mitglieder einer Gruppe bestimmt.

Besonders vorteilhaft ist es, wenn ein Verhältnis zwischen einer Anzahl der auf einem Fahrflächen-Segment befindlichen autonomen Förderfahrzeuge und einer Anzahl an Transferpunkten auf diesem Fahrflächen-Segment, welche Schnittstellen zwischen den autonomen Förderfahrzeugen und einer ortsfesten Fördertechnik oder einem Lagerbereich darstellen, unter 5 liegt. Auf diese Weise können die "Kollisionsrate / Behinderungsrate / Regelrate" und die "Kollisionswahrscheinlichkeit / Behinderungswahrscheinlichkeit / Regelwahrscheinlichkeit" insbesondere im Bereich dieser Transferpunkte gesenkt werden. Die Transferpunkte bilden ja jene Punkte auf der Fahrfläche, welche die autonomen Förderfahrzeuge ihrer Bestimmung folgend zwangsläufig anfahren. Daher kommt es insbesondere an diesen Transferpunkten beziehungsweise in Transferbereichen, welche diese Transferpunkte umgeben, zu Häufungen von autonomen Förderfahrzeugen beziehungsweise zu hoher Fahrzeugdichte. Durch Vorsehen des oben genannten Verhältnisses kann die Fahrzeugdichte insbesondere in den Transferbereichen in einem akzeptablen Bereich gehalten werden.

Günstig ist es, wenn die Fahrflächen-Segmente baulich voneinander getrennt sind. Auf diese Weise kann ausgeschlossen werden, dass ein autonomes Förderfahrzeug (unbeabsichtigt) von einem Fahrflächen-Segment auf ein anderes Fahrflächen-Segment wechselt. Beispielsweise können mehrere Fahrflächen-Segmente durch Wände baulich voneinander getrennt sein.

Besonders vorteilhaft ist es, wenn mehrere Fahrflächen-Segmente vertikal übereinander in unterschiedlichen Ebenen angeordnet sind. Ein besonderer Vorteil bei der Anordnung der Fahrflächen-Segmente in Ebenen auf unterschiedlicher Höhe liegt darin, dass dieses System leicht erweiterbar ist. Stellt sich beispielsweise im Betrieb des Kommissioniersystems heraus, dass die Leistungsfähigkeit der autonomen Förderfahrzeuge für die geforderte Kommissionierleistung nicht (mehr) ausreicht, dann kann die Kommissionierleistung durch Hinzufügen weiterer Fahrflächen-Ebenen auf einfache Weise erhöht werden. Besonders vorteilhaft ist in diesem Zusammenhang auch, dass die in einem Kommissioniersystem verbauten Lagerregale in der Regel ohnehin sehr hoch ausgeführt sind und beim Hinzufügen von weiteren Fahrflächen-Ebenen kein Umbau der äußeren Gebäudehülle des Kommissioniersystems erforderlich ist. Bei Systemen, bei denen die Fahrfläche nur in einer Ebene angeordnet ist, ist eine Erweiterung dagegen unter Umständen schwierig oder sogar unmöglich, insbesondere wenn die Umgebung des Kommissioniersystems bereits verbaut ist und kein Platz für eine Erweiterung in der Breite zur Verfügung steht. Vorteilhaft ist auch, dass sich die äußere Gebäudehülle bei einer vertikalen Segmentierung der Fahrfläche sehr gut einer Würfelform annähert, welche vorteilhaft für den zur Errichtung des Gebäudes erforderlichen Materialbedarf und für den Heiz-/Kühlbedarf des Gebäudes ist. Liegt eine gleich große Fahrfläche dagegen in einer Ebene, dann ergibt sich eine eher unvorteilhafte Gebäudeform, welche zu erhöhtem Materialbedarf für die Errichtung des Gebäudes und zu erhöhtem Heiz-/Kühlbedarf für das Gebäude führt.

Ein weiterer Vorteil dieser Bauweise ist darin begründet, dass durch Vertikalförderer (Heber, Paternoster und dergleichen), welche die Ebenen der Fahrflächen-Segmente verbinden, jeweils Transferpunkte in den Fahrflächen-Segmenten geschaffen werden. Das heißt, bei Hinzufügen einer weiteren Fahrflächen-Segment-Ebene werden auch zusätzliche Transferpunkte geschaffen, wodurch die Leistungsfähigkeit des hinzugefügten Fahrflächen-Segments im Wesentlichen der Leistungsfähigkeit eines anderen (bereits bestehenden) Fahrflächen-Segments entspricht.

Eine Vergrößerung einer unsegmentierten Fahrfläche nach dem Stand der Technik führt dagegen nicht "automatisch" zu einer Generierung weiterer Transferpunkte und damit auch nicht zu einer Leistungssteigerung des Kommissioniersystems. Im schlechtesten Fall führt eine Vergrößerung der Fahrfläche im Stand der Technik zu überhaupt keiner Leistungssteigerung, beispielsweise dann wenn die Anzahl der Transferpunkte nicht erhöht wird und die Vergrößerung der Fahrfläche lediglich zu einer Verringerung einer ohnehin bereits hinreichend niedrigen Fahrzeugdichte in einem Fahrbereich führt.

Insbesondere wenn der Lagerbereich auf mehrere Lagerebenen aufgeteilt ist, welche jeweils einer Fahrflächen-Segment-Ebene zugeordnet sind, sind grundsätzlich mehrere Strategien zur Einlagerung von Waren denkbar. Ware kann so im Kommissioniersystem eingelagert werden, dass in den Lagerebenen zumindest teilweise Waren unterschiedlicher Art gelagert werden. Das heißt, bestimmte Waren werden auf einer ersten Lagerebene gelagert, nicht aber einer zweiten Lagerebene, und umgekehrt. Daher sind bestimmte Waren ohne Vertikaltransport der betreffenden Waren nur über eine erste Fahrflächen-Segment-Ebene zugänglich, nicht aber über eine zweite Fahrflächen-Segment-Ebene, und umgekehrt. Dies ist dann von Vorteil, wenn sehr viele unterschiedliche Waren im Kommissioniersystem gelagert werden. Denkbar ist aber auch, dass die Arten von Waren in mehreren und insbesondere in allen Lagerebenen gleich sind. Das heißt, alle Arten von Waren sind ohne Vertikaltransport der betreffenden Waren über mehrere/alle Fahrflächen-Segment-Ebenen zugänglich. Dies ist dann von Vorteil, wenn relativ wenige unterschiedliche Waren im Kommissioniersystem gelagert werden, da damit die Abläufe im Kommissioniersystem flexibler gestaltet werden können. Dies trifft insbesondere dann zu, wenn nur ein Teil der Fahrflächen-Segment-Ebenen betrieben wird (z.B. im Teillastbereich oder im Fehlerfall). Diese Variante ist daher besonders ausfallsicher und effizient, da Vertikaltransporte von Waren grundsätzlich vermeidbar sind.

Besonders vorteilhaft ist es auch, wenn zumindest in einem Teil der auf verschiedenen Ebenen angeordneten Fahrflächen-Segmente unterschiedliche Temperaturen herrschen und insbesondere auf einem unterem Fahrflächen-Segment eine niedrigere Temperatur herrscht als auf einem oberen Fahrflächen-Segment. Auf diese Weise kann die natürliche Temperaturschichtung dazu genutzt werden, das Kommissioniersystem energieeffizient zu betreiben.

Vorteilhaft ist es zudem, wenn im Bereich eines Fahrflächen-Segments ein Kurzzeit-Zwischenlager/Puffer angeordnet ist. Dies bringt Vorteile bei der Sequenzierung der Auftragswaren, insbesondere dann, wenn die Auftragswaren bei einem vergleichsweise umfangreichen Auftrag chaotisch oder mit nur niedrigem Sortierungsgrad ausgelagert werden und die Sequenzierung zur Gänze oder im Wesentlichen von den autonomen Förderfahrzeugen durchgeführt wird. Die Übergabe der Waren/Auftragswaren von und zu den autonomen Förderfahrzeugen in einer absolut genauen Reihenfolge ist daher nicht erforderlich. Auftragswaren, die während des Kommissioniervorgangs sehr früh ausgelagert werden, jedoch erst vergleichsweise spät auf oder in einen Versand-Warenträger geladen werden (beispielsweise, um ein vorbestimmtes Packmuster zu realisieren), können von den autonomen Förderfahrzeugen in dem Kurzzeit-Zwischenlager/Puffer zwischengelagert und zu einem benötigten Zeitpunkt wieder abgeholt werden.

Günstig ist es weiterhin, wenn mehrere Fahrflächen-Segmente durch Lagerregale baulich voneinander getrennt sind, wobei die Lagerregale vom Kurzzeit-Zwischenlager/Puffer umfasst sind oder dieses bilden und wobei die Lagerregale von einem angrenzenden Fahrflächen-Segment zugänglich sind. Dadurch ergibt sich ein Doppelnutzen, da die Lagerregale einerseits die Funktion des Kurzzeit-Zwischenlagers/Puffers, andererseits auch die Funktion der baulichen Trennung zwischen zwei Fahrflächen-Segmenten erfüllen.

Günstig ist es auch, wenn mehrere Fahrflächen-Segmente durch Lagerregale baulich voneinander getrennt sind, wobei die Lagerregale vom Kurzzeit-Zwischenlager/Puffer umfasst sind oder dieses bilden und wobei die Lagerregale von mehreren angrenzenden Fahrflächen-Segmenten zugänglich sind. Dadurch ist ein Austausch der Waren/Auftragswaren (nicht jedoch zwingend der autonomen Förderfahrzeuge) zwischen zwei aneinander angrenzenden Fahrflächen-Segmenten möglich. Der Kommissioniervorgang kann daher sehr flexibel erfolgen.

Günstig ist es auch, wenn
der Lagerbereich Lagerregale umfasst,
Lagerplätze in den Lagerregalen vorgesehen sind, und
ein schienengebundenes Regalbediengerät vorgesehen ist, mittels welchem die Lagerplätze in den Lagerregalen zugreifbar sind, wobei die Einlagerfördertechnik und/oder die Auslagerfördertechnik das Regalbediengerät umfasst, und wobei dem Regalbediengerät im Verlauf der Einlagerfördertechnik eine ortsfeste Einlager-Übergabestation eines ortsfesten Teils der Einlagerfördertechnik vorgelagert ist, welche zur Übergabe der Waren von den autonomen Förderfahrzeugen auf die ortsfeste Einlager-Übergabestation ausgebildet ist und/oder dem Regalbediengerät im Verlauf der Auslagerfördertechnik eine ortsfeste Auslager-Übergabestation eines ortsfesten Teils der Auslagerfördertechnik nachgelagert ist, welche zur Übergabe der Auftragswaren von der Auslager-Übergabestation auf die autonomen Förderfahrzeuge ausgebildet ist.

Bei dieser Ausführungsvariante wird die Einlagerfördertechnik und/oder die Auslagerfördertechnik in einen ortsfesten, ersten Fördertechnik-Abschnitt und in einen durch die autonomen Förderfahrzeuge gebildeten zweiten Fördertechnik-Abschnitt aufgeteilt. Auf diese Weise können die Vorteile einer ortsfesten Fördertechnik mit jenen von autonomen Förderfahrzeugen kombiniert werden. Die Einlager-Übergabestation und die Auslager-Übergabestation bilden dabei Schnittstellen zwischen den autonomen Förderfahrzeugen und einer ortsfesten Fördertechnik und damit "Transferpunkte". Insbesondere kann die ortsfeste Fördertechnik Förderbänder, Rollenförderer, Heber und dergleichen umfassen.

Günstig ist es schließlich, wenn im Verlauf der Auslagerfördertechnik zumindest ein Arbeitsplatz zum Kommissionieren der Auftragswaren in oder auf Versand-Warenträger angeordnet ist. Als Versand-Warenträger kommen beispielsweise Kartons oder Paletten in Betracht. Die Kommissionierung an sich kann manuell, automatisch oder gemischt erfolgen. Auch der Arbeitsplatz zum Kommissionieren der Auftragswaren kann eine Schnittstelle zu den autonomen Förderfahrzeugen und damit einen "Transferpunkt" bilden.

Es erweist sich auch von Vorteil, wenn im Verlauf der Einlagerfördertechnik zumindest ein Stellplatz zum Bereitstellen der Waren, beispielweise auf Paletten (Liefergebinden), und/oder zumindest eine Vereinzelungsvorrichtung (Depalettierer) zum Bereitstellen vereinzelter Waren angeordnet ist.

An dieser Stelle wird angemerkt, dass sich die zum vorgestellten Verfahren offenbarten Varianten und Vorteile gleichermaßen auf das vorgestellte Kommissioniersystem beziehen und umgekehrt.

Zum besseren Verständnis der Erfindung wird diese anhand der nachfolgenden Figuren näher erläutert.

Es zeigen jeweils in stark vereinfachter, schematischer Darstellung:
- Fig. 1: einen ersten Teil eines beispielhaften und schematisch dargestellten Kommissioniersystems;
- Fig. 2: einen zweiten Teil des Kommissioniersystems, der an den ersten Teil angrenzt;
- Fig. 3: einen Ausschnitt aus einem beispielhaften und schematisch dargestellten Kommissioniersystem mit übereinander angeordneten Fahrflächen-Segmenten;
- Fig. 4: ein beispielhaftes und schematisch dargestelltes autonomes Förderfahrzeug; und
- Fig. 5: ein Diagramm, in dem die Leistungsfähigkeit des neu vorgestellten Kommissioniersystems der Leistungsfähigkeit eines herkömmlichen Kommissioniersystems gegenübergestellt ist.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

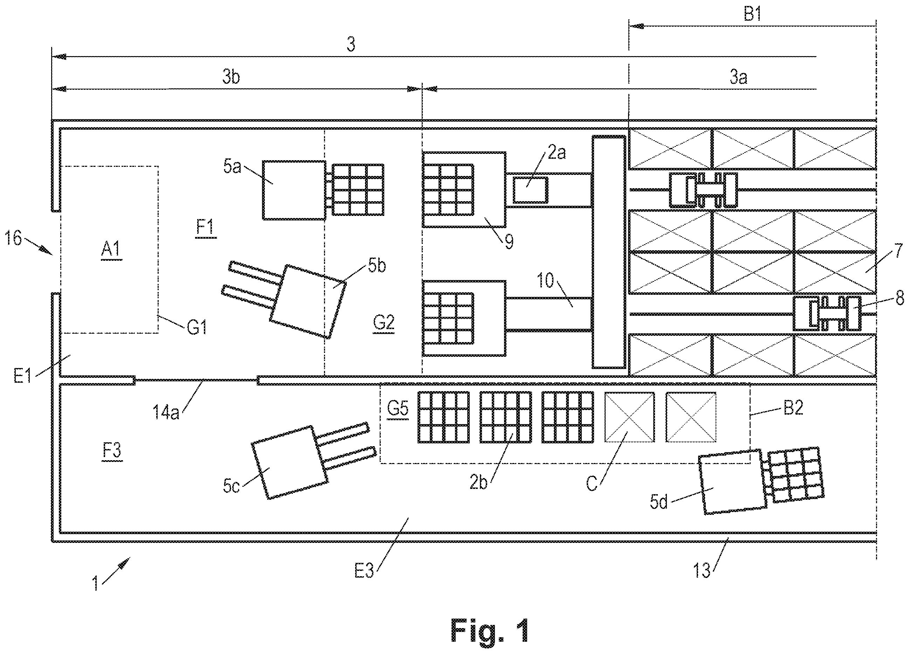

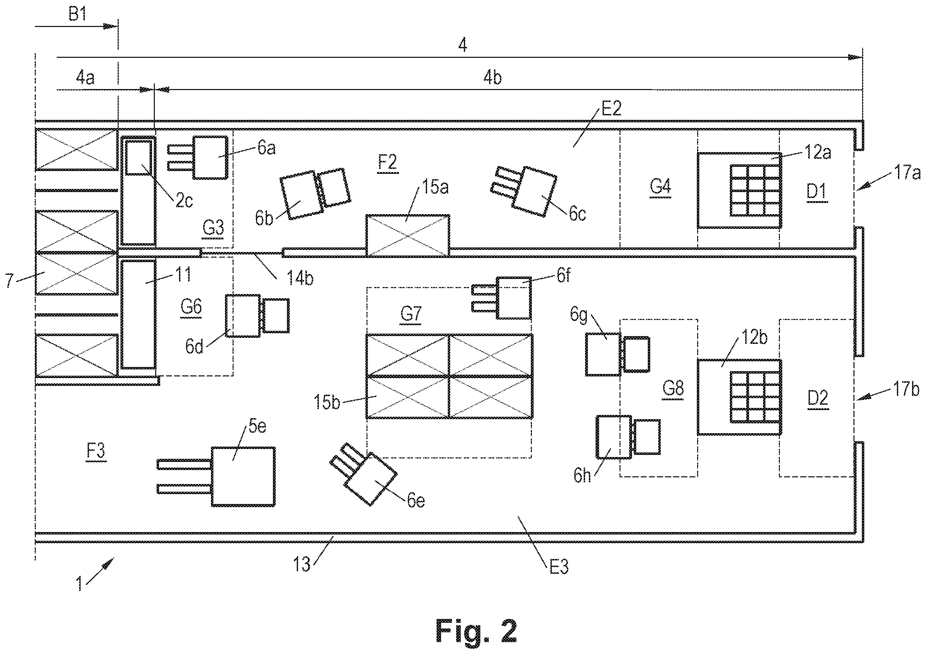

Die Figuren 1 und 2 zeigen ein beispielhaftes und schematisch dargestelltes Kommissioniersystem 1 zum Kommissionieren von Waren/Auftragswaren 2a..2c. Konkret zeigt die Fig. 1 einen ersten Teil des Kommissioniersystems 1, und die Fig. 2 zeigt einen zweiten Teil des Kommissioniersystems 1, der an den ersten Teil angrenzt.

Das Kommissioniersystem 1 umfasst einen Warenübernahmebereich A1, zwei Lagerbereiche B1, B2 mit einer Vielzahl an Lagerplätzen C zum Lagern der Waren 2a, 2b und zwei Warenübergabebereiche D1, D2. Weiterhin umfasst das Kommissioniersystem 1 eine den Warenübernahmebereich A1 und die Lagerbereiche B1, B2 verbindende Einlagerfördertechnik 3, welche zum Transportieren der Waren 2a, 2b vom Warenübernahmebereich A1 zu den Lagerbereichen B1, B2 und zum Einlagern der Waren 2a, 2b in die Lagerbereiche B1, B2 ausgebildet ist, sowie eine die Lagerbereiche B1, B2 und die Warenübergabebereiche D1, D2 verbindende Auslagerfördertechnik 4, welche zum Auslagern der Auftragswaren 2c aus den Lagerbereichen B1, B2 und zum Transportieren der Auftragswaren 2c von den Lagerbereichen B1, B2 zu den Warenübergabebereichen D1, D2 ausgebildet ist. Die Einlagerfördertechnik 3 und/oder die Auslagerfördertechnik 4 weist eine Vielzahl an autonomen Förderfahrzeugen 5a..5e, 6a..6h zum Transport der Waren 2a, 2b / Auftragswaren 2c auf einer Fahrfläche auf. Schließlich umfasst das Kommissioniersystem 1 einen Auftragsrechner zum Erfassen eines Kommissionierauftrags und zum Bestimmen von Auftragswaren 2c, welche für den Kommissionierauftrag benötigt werden.

In dem konkret dargestellten Beispiel umfasst der erste Lagerbereich B1 mehrere Lagerregale 7 mit einer Vielzahl an (nicht im einzelnen dargestellten) Lagerplätzen. Zwischen den Lagerregalen 7 verfahren schienengebundene Regalbediengeräte 8, mittels denen die Lagerplätze in den Lagerregalen 7 zugreifbar sind, und die sowohl Teil des ersten Lagerbereichs B1 als auch der Einlagerfördertechnik 3 und/oder die Auslagerfördertechnik 4 sind.

Den Regalbediengeräten 8 sind im Verlauf der Einlagerfördertechnik 3 ortsfeste Einlager-Übergabestationen vorgelagert, welche im konkreten Beispiel als Depalettierer 9 ausgebildet sind. Die Einlager-Übergabestationen / Depalettierer 9 sind über Einlager-Rollenförderer 10 mit dem ersten Lagerbereich B1 beziehungsweise den Regalbediengeräten 8 verbunden, die vorzugsweise als Mehrebenen-Regalbediengeräte ausgebildet sind. Die Einlager-Übergabestationen / Depalettierer 9 sind zur Übernahme der Waren 2a von den autonomen Förderfahrzeugen 5a, 5b ausgebildet und bilden gemeinsam mit dem Einlager-Rollenförderer 10 einen ortsfesten Teil 3a der Einlagerfördertechnik 3. Die autonomen Förderfahrzeuge 5a, 5b bilden dagegen einen nicht ortsfesten Teil 3b der Einlagerfördertechnik.

Den Regalbediengeräten 8 sind im Verlauf der Auslagerfördertechnik 4 ortsfeste Auslager-Übergabestationen 11 nachgelagert, die über die Regalbediengeräte 8 mit dem ersten Lagerbereich B1 verbunden sind. Die Auslager-Übergabestationen 11 sind zur Übergabe der Auftragswaren 2c auf die autonomen Förderfahrzeuge 6a..6c ausgebildet und bilden einen ortsfesten Teil 4a der Auslagerfördertechnik 4. Die autonomen Förderfahrzeuge 6a..6c bilden dagegen einen nicht ortsfesten Teil 4b der Auslagerfördertechnik 4.

Die Regalbediengeräte 8 sind sowohl Teil der ortsfesten Einlagerfördertechnik 3a als auch Teil der ortsfesten Auslagerfördertechnik 4a. Die Einlager-Übergabestationen 9 und die Auslager-Übergabestationen 11 bilden Schnittstellen zwischen den autonomen Förderfahrzeugen 5a, 5b, 6a..6c und der ortsfesten Einlagerfördertechnik 3a und der ortsfesten Auslagerfördertechnik 4a und damit "Transferpunkte". Insbesondere kann die ortsfeste Fördertechnik 3a, 4a nicht nur, wie dargestellt, einen Einlager-Rollenförderer 10, Einlager-Übergabestationen 9, Auslager-Übergabestationen 11 und Regalbediengeräte 8 umfassen, sondern zum Beispiel auch Förderbänder, Heber und dergleichen.

Der Ablauf beim Kommissionieren von Waren/Auftragswaren 2a..2c ist nun wie folgt:
Die Waren 2a, 2b werden am Warenübernahmebereich A1 von den autonomen Förderfahrzeugen 5a, 5b übernommen und zu den Einlager-Übergabestationen / Depalettierern 9 transportiert, wo die in Paletten angelieferten Waren 2a, 2b vereinzelt werden. Mittels des Einlager-Rollenförderers 10 und der Regalbediengeräte 8 werden die vereinzelten Waren 2a in den ersten Lagerbereich B1 eingelagert.

Wird nun ein Kommissionierauftrag erfasst, so werden die Auftragswaren 2c, welche für den Kommissionierauftrag benötigt werden bestimmt. Die "Waren" 2a werden dann zu "Auftragswaren" 2c. In Folge werden die Auftragswaren 2c mit Hilfe der Regalbediengeräte 8 aus dem ersten Lagerbereich B1 ausgelagert und zu den Auslager-Übergabestationen 11 transportiert. Dort werden sie von den Förderfahrzeugen 6a..6h übernommen und zu den Palettierern 12a, 12b transportiert, welche die vereinzelten Auftragswaren 2c zu einem Auftrag beziehungsweise zu Aufträgen zusammenstellt. Der zum Beispiel auf einer Palette oder einem anderen Versand-Warenträger zusammengestellte Auftrag wird dann am Warenübergabebereich D1, D2 für die Abholung bereitgestellt.

Die Palettierer 12a, 12b bilden allgemein einen Arbeitsplatz zum Kommissionieren der Auftragswaren 2b in oder auf Versand-Warenträger. Denkbar ist aber auch, dass der Arbeitsplatz zum Kommissionieren für die manuelle Kommissionierung ausgebildet ist. Auch eine gemischte Arbeitsweise ist grundsätzlich denkbar. Als Versand-Warenträger kommen beispielsweise Kartons oder Paletten in Betracht.

Denkbar ist auch, dass ein Auftrag (nur oder zusätzlich) Waren 2b enthält, die nicht vereinzelt werden müssen sondern direkt vom Warenübernahmebereich A1 zum zweiten Lagerbereich B2 und von dort zum Warenübergabebereich D2 transportiert werden können ("Cross-Docking-Waren"). Ein Depalettieren und anschließendes Palettieren entfällt bei diesen Waren 2b.

Die Waren 2a werden also in einem ersten Lagerbereich B1 vereinzelt und die Waren 2b in einem zweiten Lagerbereich B2 in Gruppen, insbesondere auf Paletten, gelagert. Eine solche Vorgangsweise ist besonders dann vorteilhaft, wenn Aufträge (häufiger) auch Gruppen von Auftragswaren umfassen, insbesondere komplette Paletten dieser Auftragswaren. Denkbar ist aber auch, dass in der Kommissionieranlage 1 nur vereinzelte Auftragsware 2c zu einem Auftrag zusammengestellt wird oder nur in Gruppen vorliegende Auftragsware. Denkbar ist auch, dass Waren 2a, 2b in einem gemeinsamen Lagerbereich vereinzelt und in Gruppen gelagert werden.

Weiterhin wird darauf hingewiesen, dass die Waren/Auftragswaren 2a, 2b durch die autonomen Förderfahrzeuge 5a, 5b im vorliegenden Beispiel im ersten Fahrflächen-Segment E1 nur in Gruppen, insbesondere auf Paletten, transportiert werden, wohingegen die autonomen Förderfahrzeuge 6a..6c die Waren/Auftragswaren 2c und im zweiten Fahrflächen-Segment E2 nur vereinzelt transportiert werden. Die autonomen Förderfahrzeuge 5a, 5b, welche Gruppen von Waren/Auftragswaren 2a, 2b befördern, sind in aller Regel langsamer als autonome Förderfahrzeuge 6a..6c, welche für den Transport einzelner Waren/Auftragswaren 2c ausgelegt sind. Durch die vorgeschlagenen Maßnahmen werden Behinderungen der schnelleren autonomen Förderfahrzeuge 6a..6c durch die langsameren autonomen Förderfahrzeuge 5a, 5b vermieden. Dementsprechend operieren in einem ersten Fahrflächen-Segment E1 vorzugsweise autonome Förderfahrzeuge 5a, 5b mit einer ersten Maximal-Geschwindigkeit und in einem zweiten Fahrflächen-Segment E2 autonome Förderfahrzeuge 6a..6c mit einer zweiten, anderen Maximal-Geschwindigkeit.

Vorzugsweise operieren in einem ersten Fahrflächen-Segment E1 darüber hinaus autonome Förderfahrzeuge 5a, 5b einer ersten Bauart und in einem zweiten Fahrflächen-Segment E2 autonome Förderfahrzeuge 6a..6c einer zweiten, anderen Bauart. Zum Beispiel können die autonomen Förderfahrzeuge 5a, 5b, 6a..6c unterschiedlich große Transportplattformen aufweisen und/oder unterschiedliche Nutzlasten aufnehmen.

Im dritten Fahrflächen-Segment E3 werden die Waren/Auftragswaren 2b, 2c durch die autonomen Förderfahrzeuge 5c..5e, 6d..6h sowohl vereinzelt als auch in Gruppen transportiert. Dies ermöglicht die Zusammenstellung einer Lieferung in besonders flexibler Weise.

Denkbar ist auch, dass die oben zur vereinzelten Ware/Auftragsware 2a..2c angeführten Varianten auf kleine Gruppen von Waren/Auftragswaren 2a..2c angewandt werden. Demgemäß können die Waren/Auftragswaren 2a..2c durch die autonomen Förderfahrzeuge 5c..5e, 6d..6h in einem Fahrflächen-Segment E1..E3 in verschieden großen Gruppen transportiert werden. Denkbar ist auch, dass die Waren/Auftragswaren 2a..2c durch die autonomen Förderfahrzeuge 5c..5e, 6d..6h in einem ersten Fahrflächen-Segment E1..E3 in einer ersten Gruppengröße und in einem zweiten Fahrflächen-Segment E1..E3 in einer anderen Gruppengröße transportiert werden. Die Gruppengröße ist dabei durch die Anzahl der Mitglieder einer Gruppe bestimmt.

Im Bereich eines Fahrflächen-Segments kann auch ein Kurzzeit-Zwischenlager/Puffer angeordnet sein. Konkret ist in diesem Beispiel ein durch ein Lagerregal gebildetes Kurzzeit-Zwischenlager 15a im zweiten Fahrflächen-Segment E2 vorgesehen und ein durch mehrere Lagerregale gebildetes Kurzzeit-Zwischenlager 15b im dritten Fahrflächen-Segment E3. Kurzzeit-Zwischenlager/Puffer 15a, 15b bringen Vorteile bei der Sequenzierung der Auftragswaren 2c, insbesondere dann, wenn die Auftragswaren bei einem vergleichsweise umfangreichen Auftrag chaotisch oder mit nur niedrigem Sortierungsgrad ausgelagert werden und die Sequenzierung zur Gänze oder im Wesentlichen von den autonomen Förderfahrzeugen 5c..5e, 6d..6h durchgeführt wird. Auftragswaren 2c, die während des Kommissioniervorgangs sehr früh ausgelagert werden, jedoch erst vergleichsweise spät auf oder in einen Versand-Warenträger geladen werden (beispielsweise, um ein vorbestimmtes Packmuster zu realisieren), können von den autonomen Förderfahrzeugen 5c..5e, 6d..6h in dem Kurzzeit-Zwischenlager/Puffer 15a, 15b zwischengelagert und zu einem benötigten Zeitpunkt wieder abgeholt werden.

Das Kurzzeit-Zwischenlager 15a stellt einen Sonderfall dar, da dieses auch die bauliche Trennung zwischen dem zweiten Fahrflächen-Segment E2 und dem dritten Fahrflächen-Segment E3 bildet. Das Kurzzeit-Zwischenlager 15a kann in dem gezeigten Beispiel nur vom zweiten Fahrflächen-Segment E2 zugänglich sein, nur vom dritten Fahrflächen-Segment E3 oder sowohl vom zweiten Fahrflächen-Segment E2 als auch vom dritten Fahrflächen-Segment E3. Im letzten Fall ist ein Austausch der Auftragswaren 2c zwischen den aneinander angrenzenden Fahrflächen-Segmenten E2 und E3 möglich, ohne dass dazu autonome Förderfahrzeuge 5c..5e, 6d..6h die Fahrflächen-Segmente E2 und E3 wechseln müssen. Der Kommissioniervorgang kann daher sehr flexibel erfolgen.

Die autonomen Förderfahrzeuge 5a..5e, 6a..6h bewegen sich ganz allgemein auf mehreren Fahrflächen-Segmenten E1..E3, die gemeinsam die Fahrfläche für die autonomen Förderfahrzeuge 5a..5e, 6a..6h bilden. Die Fahrfläche ist also in mehrere Fahrflächen-Segmente E1..E3 unterteilt. Mit Hilfe einer (übergeordneten) Steuerung werden die Fahrbewegungen der autonomen Förderfahrzeuge 5a..5e, 6a..6h so koordiniert, dass Fahrbewegungen in den Fahrflächen-Segmenten E1..E3 jeweils überwiegend von einer geschlossenen Gruppe an autonomen Förderfahrzeugen 5a..5e, 6a..6h durchgeführt wird.

In dem dargestellten Beispiel sind die Fahrflächen-Segmente E1..E3 baulich voneinander getrennt, konkret durch die Wände 13 des Gebäudes, in dem das Kommissioniersystem 1 angeordnet ist. Auf diese Weise kann ausgeschlossen werden, dass ein autonomes Förderfahrzeug 5a..5e, 6a..6h (unbeabsichtigt) von einem Fahrflächen-Segment E1..E3 auf ein anderes Fahrflächen-Segment E1..E3 wechselt.

Die Tore 14a, 14b können für einen Austausch von autonomen Förderfahrzeugen 5a..5e, 6a..6h zwischen verschiedenen Gruppen und zwischen verschiedenen Fahrflächen-Segmenten E1..E3 bei Bedarf geöffnet werden oder können auch ständig geöffnet sein. Dadurch können zum Beispiel in einer Gruppe nicht benötigte autonome Förderfahrzeuge 5a..5e, 6a..6h einer anderen Gruppe zur Verfügung gestellt werden, in der ein (temporärer) Engpass an autonomen Förderfahrzeugen 5a..5e, 6a..6h herrscht.

Ein Austausch an autonomen Förderfahrzeugen 5a..5e, 6a..6h zwischen zwei verschiedenen Fahrflächen-Segmenten E1..E3 betrifft maximal 10%, vorteilhaft maximal 5%, der auf der Fahrfläche durchgeführten Fahrten.

Durch die vorgeschlagenen Maßnahmen sind die Fahrbewegungen trotz hoher Verkehrsdichte gut plan- und koordinierbar, und die Kollisionswahrscheinlichkeit / Behinderungswahrscheinlichkeit / Regelwahrscheinlichkeit und die Kollisionsrate / Behinderungsrate / Regelrate kann gegenüber Systemen nach dem Stand der Technik deutlich reduziert werden.

Generell kann ein Fahrflächen-Segment E1..E3 in Transferbereiche und Fahrbereiche unterteilt werden. Transferbereiche umgeben Transferpunkte, welche Schnittstellen zwischen den autonomen Förderfahrzeugen 5a..5e, 6a..6h zu einer ortsfesten Fördertechnik 3a, 4a oder Schnittstellen zwischen den autonomen Förderfahrzeugen 5a..5e, 6a..6h zu Lagerbereichen B1, B2 darstellen. Dagegen ist in Fahrbereichen kein Transfer zwischen autonomen Förderfahrzeugen 5a..5e, 6a..6h und einer ortsfesten Fördertechnik 3a, 4a oder zwischen autonomen Förderfahrzeugen 5a..5e, 6a..6h und einem Lagerbereich B1, B2 möglich.

In dem gezeigten Beispiel weist das erste Fahrflächen-Segment E1 den Fahrbereich F1 und die Transferbereiche G1 (übereinstimmend mit dem Warenübernahmebereich A1) und G2 auf, das zweite Fahrflächen-Segment E2 den Fahrbereich F2 und die Transferbereiche G3, G4 und das dritte Fahrflächen-Segment E3 den Fahrbereich F3 und die Transferbereiche G5..G8.

Die Transferpunkte und Transferbereiche G1..G8 bilden jene Punkte/Bereiche auf der Fahrfläche, welche die autonomen Förderfahrzeuge 5a..5e, 6a..6h ihrer Bestimmung folgend zwangsläufig anfahren. Daher kommt es insbesondere an diesen Transferpunkten/Transferbereichen G1..G8 zu Häufungen von autonomen Förderfahrzeugen 5a..5e, 6a..6h und zu hoher Fahrzeugdichte. Dementsprechend ist auch die Kollisionsrate / Behinderungsrate / Regelrate und die Kollisionswahrscheinlichkeit / Behinderungswahrscheinlichkeit / Regelwahrscheinlichkeit dort vergleichsweise hoch. Im Fahrbereich F1..F3 ist die Fahrzeugdichte und auch die Kollisionsrate / Behinderungsrate / Regelrate und die Kollisionswahrscheinlichkeit / Behinderungswahrscheinlichkeit / Regelwahrscheinlichkeit in aller Regel geringer als in den Transferpunkten/Transferbereichen G1..G8. Die Grenzen zwischen einem Transferbereich G1..G8 und einem Fahrbereich F1..F3 sind in der Regel fließend, und es kommt nicht zu einer plötzlichen Änderung der Fahrzeugdichte, sondern zu einer graduellen Änderung.

Vorteilhaft ist es dabei, wenn ein Verhältnis zwischen einer Anzahl der auf einem Fahrflächen-Segment E1..E3 befindlichen autonomen Förderfahrzeuge 5c..5e, 6d..6h und einer Anzahl an Transferpunkten auf diesem Fahrflächen-Segment E1..E3 unter 5 liegt. Dadurch kann die Kollisionsrate / Behinderungsrate / Regelrate und die Kollisionswahrscheinlichkeit / Behinderungswahrscheinlichkeit / Regelwahrscheinlichkeit in den Transferbereichen G1..G8 auf einem akzeptablen Wert gehalten werden.

Neben der guten Planbarkeit und Koordinierung der Fahrbewegungen liegt ein besonderer Vorteil der Segmentierung der Fahrfläche auch darin, dass der Normalbetrieb bei einer Störung von bestimmten Fahrflächen-Segmenten E1..E3 in jenen Fahrflächen-Segmenten E1..E3 aufrechterhalten werden kann, in denen keine Störung vorliegt. Im Störfall oder Wartungsfall kann der Zugang für Personen zu Fahrflächen-Segmenten E1..E3, zu denen der Zugang im Normalbetrieb gesperrt ist, freigegeben werden, beispielsweise um die Behebung der Störung beziehungsweise Wartung des Kommissioniersystems 1 zu ermöglichen. Zu diesem Zweck können die Förderfahrzeuge 5a..5e, 6a..6h verlangsamt oder stillgesetzt werden. Durch die Segmentierung wirkt sich eine Reduktion der Fahrgeschwindigkeit der autonomen Förderfahrzeuge 5a..5e, 6a..6h oder eine Stillsetzung derselben weit weniger auf die Gesamtleistung des Kommissioniersystems 1 im Störfall aus, als dies bei einer unsegmentierten Fahrfläche nach dem Stand der Technik der Fall ist.

Auch im Normalbetrieb können einige Fahrflächen-Segmente E1..E3 frei für den Zugang von Menschen sein, wohingegen andere Fahrflächen-Segmente E1..E3 im Normalbetrieb für den Zugang durch Menschen gesperrt sind. Beispielsweise könnten die Fahrflächen-Segmente E1 und E3 im Normalbetrieb wegen der relativ schweren und damit potentiell gefährlichen autonomen Förderfahrzeuge 5a..5e für den Personenzugang gesperrt sein, wohingegen das Fahrflächen-Segment E2 im Normalbetrieb wegen der relativ leichten und damit ungefährlicheren autonomen Förderfahrzeuge 6a..6h für den Personenzugang offen sein kann. Weitere Kriterien zur Differenzierung des Personenzutritts sind unter anderem die Geschwindigkeit eines autonomen Förderfahrzeugs 5a..5e, 6a..6h oder die Art der Sensorik zur Navigation und Kollisionsvermeidung.

Der Normalbetrieb kann zudem durch eine Änderung des Betriebsmodus des Kommissioniersystems 1 unterbrochen werden, etwa um das Kommissioniersystem 1 an unterschiedliche Leistungsanforderungen anzupassen.

Die Leistungsanpassung beziehungsweise der Wechsel des Betriebsmodus kann mit der temporären Stilllegung beziehungsweise temporären Inbetriebnahme von Teilen des Kommissioniersystems 1 verbunden sein, insbesondere mit der temporären Stilllegung beziehungsweise temporären Inbetriebnahme von Fahrflächen-Segmenten E1..E3. So kann im gezeigten Beispiel insbesondere das zweite Fahrflächen-Segment E2 in Zeiten geringerer Leistungsanforderung außer Betrieb genommen werden, da die dort ausgeführte Kommissionierung von vereinzelter Ware 2c grundsätzlich auch im dritten Fahrflächen-Segment E3 ausgeführt werden kann. Dadurch kann das Kommissioniersystem 1 auch bei geringerer Systemleistung mit hoher Effizienz betrieben werden.

Denkbar ist weiterhin, dass autonome Förderfahrzeuge 5a..5e, 6a..6h von abgeschalteten Fahrflächen-Segmenten E1..E3 bei einem Wechsel des Betriebsmodus des Kommissioniersystems 1 zumindest teilweise in den aktiv bleibenden Fahrflächen-Segmenten E1..E3 genutzt werden. Beispielsweise könnten die autonomen Förderfahrzeuge 6a..6c bei einer Abschaltung des zweiten Fahrflächen-Segments E2 zumindest teilweise in das dritte Fahrflächen-Segment E3 wechseln um dort "auszuhelfen". Dadurch kann die Leistungsfähigkeit im dritten Fahrflächen-Segment E3 erhöht werden, sodass der Leistungsverlust im Kommissioniersystem 1 bei der Abschaltung des zweiten Fahrflächen-Segments E2 verringert wird. Dadurch kann die Leistungsanpassung im Kommissioniersystem 1 fein abgestuft erfolgen.

Denkbar ist weiterhin, dass eine zu den Fahrflächen-Segmenten E1..E3 hin oder eine von den Fahrflächen-Segmenten E1..E3 weg führende, ortsfeste Fördertechnik 3a, 4a nur jene Fahrflächen-Segmente E1..E3 versorgt, die aufgrund des momentanen Leistungsbedarfs tatsächlich auch betrieben werden. Beispielsweise kann bei Abschaltung des zweiten Fahrflächen-Segments E2 jene ortsfeste Fördertechnik 3a, 4a deaktiviert werden, welche das Fahrflächen-Segment E2 versorgt. Konkret ist das der obere der beiden in Fig. 1 dargestellten Depalletierer 9, der obere Zweig des Einlager-Rollenförderers 10, das obere Regalbediengerät 8 und die obere Auslager-Übergabestation 11.

Besonders vorteilhaft ist es in diesem Zusammenhang, wenn die Arten von Waren 2a, 2b, die in einem über die Einlager-/Auslagerfördertechnik 3, 4 mit einem Fahrflächen-Segment E1..E3 verbundenen Lagerbereich B1, B2 gelagert werden, für alle Fahrflächen-Segmente E1..E3 gleich sind. Das heißt, alle Arten von Waren 2a, 2b sind über alle Fahrflächen-Segmente E1..E3 zugänglich. Dadurch können auch im Teillastbereich oder im Fehlerfall (also zum Beispiel bei einer Abschaltung des zweiten Fahrflächen-Segments E2) alle Arten von Waren 2a, 2b im Kommissioniersystem 1 verarbeitet werden.

Ein weiterer Effekt bei der (temporären) Abschaltung von Fahrflächen-Segmenten E1..E3 besteht darin, dass nicht nur Energie für die Einlager-/Auslagerfördertechnik 3, 4 eingespart werden kann, sondern auch für Nebenaggregate wie Beleuchtung und Heizung/Kühlung.

Beispielsweise kann vorgesehen sein, dass in den Fahrflächen-Segmenten E1..E3 unterschiedliche Temperaturen herrschen. Etwa können in einem Fahrflächen-Segment E1..E3 Tiefkühlwaren 2a..2c und in einem anderen Fahrflächen-Segment bei Raumtemperatur zu lagernde Waren/Auftragswaren 2a..2c bewegt werden. Wird nun im zweiten Fahrflächen-Segment E2 zum Beispiel Tiefkühlware 2a, 2b verarbeitet, so kann bei einer Abschaltung desselben auch die Temperatur im zweiten Fahrflächen-Segment E2 zum Zwecke der Energieeinsparung temporär angehoben werden.

Herrschen in den Fahrflächen-Segmenten E1..E3 unterschiedliche Temperaturen, dann können die autonomen Förderfahrzeuge 6a..6h auch für unterschiedliche Temperaturbereiche ausgelegt sein. Beispielsweise können die im zweiten Fahrflächen-Segment E2 fahrenden autonomen Förderfahrzeuge 6a..6c trotz gleicher Nutzlast anders ausgebildet sein als die im dritten Fahrflächen-Segment E3 fahrenden autonomen Förderfahrzeuge 6d..6h.

Ergänzend wird abschließend angemerkt, dass sich der Warenübernahmebereich A1 in diesem Beispiel direkt am Wareneingang 16 und die Warenübergabebereiche D1, D2 direkt an den Warenausgängen 17a, 17b befinden. Dies ist zwar vorteilhaft, jedoch keine zwingende Bedingung. Denkbar wäre auch, dass sich der Warenübernahmebereich A1 und/oder der die Warenübergabebereiche D1, D2 an einer anderen Stelle des Kommissioniersystems 1 befinden.

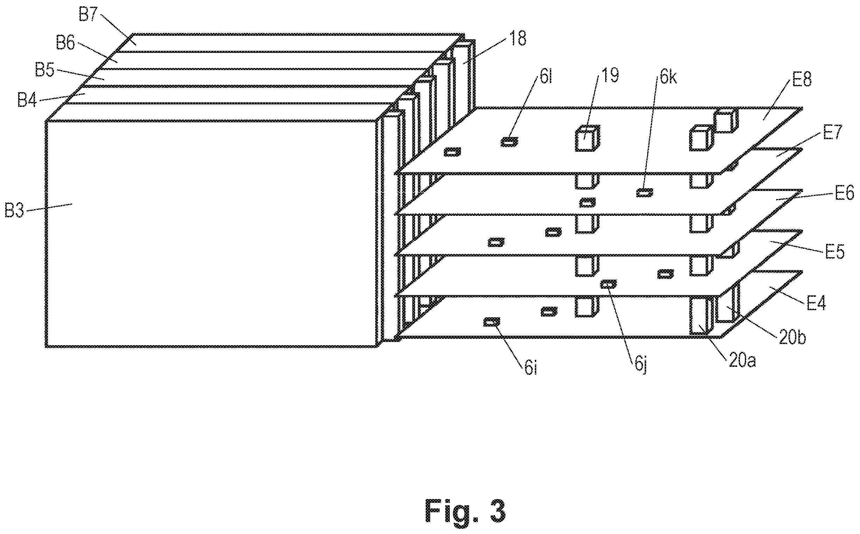

Die Fig. 3 zeigt nun einen Ausschnitt aus einem weiteren beispielhaften und schematisch dargestellten Kommissioniersystem. Im Unterschied zu dem in den Figuren 1 und 2 dargestellten Kommissioniersystem 1 sind hier Fahrflächen-Segmente E4..E8 mit autonomen Förderfahrzeugen 6i..6l nicht nebeneinander sondern vertikal übereinander angeordnet. An die Fahrflächen-Segmente E4..E8 sind mehrere Lagerbereiche B3..B7 mit einer Vielzahl an Lagerplätzen C über Heber 18 verbunden, die in diesem Beispiel zum Transport von vereinzelter Auftragsware 2c zwischen den Lagerbereichen B3..B7 und den Fahrflächen-Segmenten E4..E8 ausgebildet sind. In den Lagerbereichen B3..B7 können Regalbediengeräte 8 vorgesehen sein, so wie dies in dem in den Figuren 1 und 2 dargestellten Beispiel der Fall ist. Wegen der Heber 18 sind diese vorzugsweise als Einebenen-Regalbediengeräte ("Shuttles") ausgebildet. Die Anordnung umfasst weiterhin einen Heber 19, welcher zum Transport von autonomen Förderfahrzeugen 6i..6l zwischen den Fahrflächen-Segmenten E4..E8 ausgebildet ist. Schließlich umfasst die Anordnung auch zwei Heber 20a, 20b, welche für den Transport von Gruppen von Auftragswaren 2b zwischen den Fahrflächen-Segmenten E4..E8 ausgebildet sind, also beispielsweise zum Vertikaltransport von Paletten.

Die Funktion der in der Fig. 3 dargestellten Anordnung ist sinngemäß zu dem in den Figu-ren 1 und 2 dargestellten Kommissioniersystem 1, wobei im Folgenden davon ausgegangen wird, dass die gezeigte Anordnung den auslagerseitigen Bereich des Kommissioniersystems zeigt.

Auch hier wird ein Kommissionierauftrag erfasst, und es werden die für den Kommissionierauftrag benötigten Auftragswaren 2c bestimmt. In Folge werden die Auftragswaren 2c mit einem Regalbediengerät 8 aus dem Lagerbereich B3..B7 ausgelagert und gegebenenfalls mit dem Heber 18 in die Fahrflächen-Segmente E4..E8 transportiert. Dort werden die Auftragswaren 2c mit Hilfe der autonomen Förderfahrzeuge 6i..6l zu einem Arbeitsplatz zum Kommissionieren der Auftragswaren 2c gebracht, wo sie in oder auf Versand-Warenträger geladen werden. Beispielsweise kann dies manuell oder wieder mit (nicht dargestellten) Palettierern 12a, 12b erfolgen. Von dort werden die versandfertigen Auftragswaren 2c zu einem Warenübergabebereich D1, D2 beziehungsweise Warenausgang 17a, 17b gebracht. Beispielsweise kann dies über die Heber 20a, 20b erfolgen, wenn der Warenübergabebereich D1, D2 / Warenausgang 17a, 17b, wie dies für das vorliegende Beispiel angenommen wird, im Erdgeschoß angeordnet ist. Grundsätzlich könnten die Warenübergabebereiche D1, D2 / Warenausgänge 17a, 17b auch in einer anderen Ebene oder auf verschiedenen Ebenen angeordnet sein.

Die Anordnung der Arbeitsplätze zum Kommissionieren auf den Fahrflächen-Segmenten E4..E8 kann grundsätzlich auf verschiedene Weise erfolgen. Beispielsweise kann vorgesehen sein, dass je Fahrflächen-Segment E4..E8 je ein Arbeitsplatz zum Kommissionieren vorgesehen ist. Denkbar ist auch, dass ein Arbeitsplatz zum Kommissionieren nur in einigen der Fahrflächen-Segmente E4..E8, insbesondere nur in einem der Fahrflächen-Segmente E4..E8, vorgesehen ist. Schließlich wäre auch vorstellbar, dass es in einem Fahrflächen-Segment E4..E8 mehrere Arbeitsplätze zum Kommissionieren gibt.

Fahrbewegungen in Fahrflächen-Segmenten E4..E8 werden wiederum jeweils überwiegend von einer geschlossenen Gruppe an autonomen Förderfahrzeugen 6i..6l durchgeführt. Ein Austausch an autonomen Förderfahrzeugen 6i..6l zwischen zwei verschiedenen Fahrflächen-Segmenten E4..E8 betrifft maximal 10%, vorteilhaft maximal 5%, der auf der Fahrfläche durchgeführten Fahrten. Ein Austausch der autonomen Förderfahrzeuge 6i..6l kann bei Bedarf über den Heber 19 erfolgen, welcher funktional an die Stelle der Tore 14a, 14b tritt. Ein Austausch der autonomen Förderfahrzeuge 6i..6l kann wiederum im Besonderen bei einer Störung oder bei einer Umschaltung des Betriebsmodus des Kommissioniersystems erfolgen. Ist kein Austausch der autonomen Förderfahrzeuge 6i..6l vorgesehen, dann kann der Heber 19 auch entfallen.

Die auf den Fahrflächen-Segmenten E4..E8 fahrenden autonomen Förderfahrzeuge 6i..6l können auch unterschiedlicher Bauart sein. Beispielsweise könnten die auf dem Fahrflächen-Segment E4 fahrenden Förderfahrzeuge 6i anders aufgebaut sein als die auf dem Fahrflächen-Segment E8 fahrenden Förderfahrzeuge 6l. Die auf den Fahrflächen-Segmenten E4..E8 fahrenden autonomen Förderfahrzeuge 6i..6l können sich beispielsweise hinsichtlich ihrer Maximal-Geschwindigkeit unterscheiden und/oder für den Temperaturbereich, für den sie ausgelegt sind. Beispielsweise ist dies wieder dann von Vorteil, wenn in den Fahrflächen-Segmenten E4..E8 unterschiedliche Temperaturen herrschen. Besonders vorteilhaft ist es dabei, wenn auf einem unterem Fahrflächen-Segment E4 eine niedrigere Temperatur herrscht als auf einem oberen Fahrflächen-Segment E8, da auf diese Weise die natürliche Temperaturschichtung dazu genutzt werden kann, das Kommissioniersystem energieeffizient zu betreiben.

Auch das im Hinblick zum Zugang für Personen zu den Fahrflächen-Segmenten E1..E3 Gesagte ist uneingeschränkt auch für die Fahrflächen-Segmente E4..E8 anwendbar. Beispielsweise können einige Fahrflächen-Segmente E4..E8 frei für den Zugang von Menschen sein, wohingegen andere Fahrflächen-Segmente E4..E8 für den Zugang durch Menschen gesperrt ist. Insbesondere betrifft dies auch das zum Störfall Gesagte. Selbstverständlich kann der Normalbetrieb auch bei der in Fig. 3 gezeigten Anordnung in jenen Fahrflächen-Segmenten E4..E8 aufrechterhalten werden, in denen keine Störung vorliegt, wohingegen die autonomen Förderfahrzeuge 6i..6l in einem Fahrflächen-Segment E4..E8, in dem eine Störung vorliegt, verlangsamt oder stillgesetzt werden.

Grundsätzlich sind die Fahrflächen-Segmente E4..E8 in dem in Fig. 3 dargestellten Beispiel durch ihre spezielle Anordnung übereinander voneinander baulich getrennt. Grundsätzlich könnte in einer Ebene aber auch eine weitere Unterteilung in Fahrflächen-Segmente erfolgen, beispielsweise so, wie dies für die Fahrflächen-Segmente E1..E3 des in den Figuren 1 und 2 dargestellten Kommissioniersystems 1 der Fall ist. Die bauliche Trennung könnte dann wiederum durch eine Wand 13 oder einem zwischen zwei Fahrflächen-Segmenten E1, E3 liegenden Kurzzeit-Zwischenlager/Puffer 15a. Auch die Anwendung eines im Fahrflächen-Segment E3 liegenden Zwischenlagers/Puffers 15b ist in der in Fig. 3 dargestellten Anordnung uneingeschränkt möglich.

Zusätzlich zu der Verarbeitung von vereinzelter Auftragsware 2c kann in der in Fig. 3 dargestellten Anordnung auch die Verarbeitung von Auftragswaren 2b in Gruppen vorgesehen sein. Neben den Lagerbereichen B3..B7 für vereinzelte Waren 2a können auch Lagerbereiche für Gruppen von Auftragswaren 2b vorgesehen sein. Weiterhin kann vorgesehen sein, dass die Auftragswaren 2c durch die autonomen Förderfahrzeuge 6i..6l in einem ersten Fahrflächen-Segment E4..E8 nur in Gruppen, insbesondere auf Paletten, und in einem zweiten Fahrflächen-Segment E4..E8 nur vereinzelt transportiert werden. Darüber hinaus kann vorgesehen sein, dass die Auftragswaren 2b, 2c durch die autonomen Förderfahrzeuge 6i..6l in einem Fahrflächen-Segment E4..E8 sowohl vereinzelt als auch in Gruppen, insbesondere auf Paletten, transportiert werden.

Auch das zu den Transferpunkten, Transferbereichen und Fahrbereichen bereits Gesagte gilt uneingeschränkt auch für die in der Fig. 3 dargestellte Anordnung, insbesondere im Hinblick auf eine Kollisionsrate / Behinderungsrate / Regelrate und eine Kollisionswahrscheinlichkeit / Behinderungswahrscheinlichkeit / Regelwahrscheinlichkeit. In diesem Zusammenhang wird darauf hingewiesen, dass die Kreuzungspunkte der Heber 18, 19, 20a und 20b mit den Fahrflächen-Segmenten E4..E8 in aller Regel Schnittstellen zwischen den autonomen Förderfahrzeugen 6i..6l und der ortsfesten Auslagerfördertechnik 4a und damit Transferpunkte bilden.

Durch die Anordnung der Fahrflächen-Segmente E4..E8 in Ebenen auf unterschiedlicher Höhe ist das vorgestellte Kommissioniersystem leicht erweiterbar. Stellt sich beispielsweise im Betrieb des Kommissioniersystems heraus, dass die Leistungsfähigkeit der autonomen Förderfahrzeuge 6i..6l für die geforderte Kommissionierleistung nicht (mehr) ausreicht, dann kann die Kommissionierleistung durch Hinzufügen weiterer Fahrflächen-Ebenen E4..E8 auf einfache Weise erhöht werden. Besonders vorteilhaft ist in diesem Zusammenhang auch, dass die in einem Kommissioniersystem vorhandenen Lagerbereiche B3..B7 in der Regel sehr hoch ausgeführt sind und beim Hinzufügen von weiteren Fahrflächen-Ebenen E4..E8 kein Umbau der äußeren Gebäudehülle des Kommissioniersystems erforderlich ist. Zudem nähert sich die äußere Gebäudehülle bei einer vertikalen Segmentierung der Fahrfläche sehr gut einer Würfelform an, welche vorteilhaft für den zur Errichtung des Gebäudes erforderlichen Materialbedarf und für den Heiz-/Kühlbedarf des Gebäudes ist. Bei Hinzufügen einer weiteren Fahrflächen-Segment-Ebene E4..E8 werden "automatisch" auch zusätzliche Transferpunkte geschaffen, wodurch die Leistungsfähigkeit des hinzugefügten Fahrflächen-Segments E4..E8 im Wesentlichen der Leistungsfähigkeit eines anderen (bereits bestehenden) Fahrflächen-Segments E4..E8 entspricht.

Hinsichtlich der Einlagerung von Waren 2a sind grundsätzlich mehrere Strategien denkbar. Ware 2a kann so im Kommissioniersystem eingelagert werden, dass in den Ebenen der Lagerbereiche B3..B7 zumindest teilweise Waren 2a unterschiedlicher Art gelagert werden. Das heißt, bestimmte Waren 2a werden auf einer ersten Ebene der Lagerbereiche B3..B7 gelagert, nicht aber einer zweiten Ebene der Lagerbereiche B3..B7, und umgekehrt. Daher sind bestimmte Waren 2a ohne Vertikaltransport mit dem Heber 18 nur über eine erste Fahrflächen-Segment-Ebene E1..E8 zugänglich, nicht aber über eine zweite Fahrflächen-Segment-Ebene E1..E8, und umgekehrt. Dies ist dann von Vorteil, wenn sehr viele unterschiedliche Waren 2a im Kommissioniersystem gelagert werden. Denkbar ist aber auch, dass die Arten von Waren 2a in mehreren und insbesondere in allen Ebenen der Lagerbereiche B3..B7 gleich sind. Das heißt, alle Arten von Waren 2a sind ohne Vertikaltransport mit dem Heber 18 über mehrere/alle Fahrflächen-Segment-Ebenen E1..E8 zugänglich. Dies ist dann von Vorteil, wenn relativ wenige unterschiedliche Waren 2a im Kommissioniersystem gelagert werden, da damit die Abläufe im Kommissioniersystem flexibler gestaltet werden können. Dies trifft insbesondere dann zu, wenn nur ein Teil der Fahrflächen-Segment-Ebenen E1..E8 betrieben wird (z.B. im Teillastbereich oder im Fehlerfall). Diese Variante ist daher besonders ausfallsicher und effizient, da Vertikaltransporte von Waren 2a grundsätzlich vermeidbar sind.

Das im Hinblick zur Behandlung eines Störfalls und zum Wechsel des Betriebsmodus im Zuge einer Leistungsanpassung Gesagte gilt uneingeschränkt auch für die in Fig. 3 dargestellte Anordnung.

Wenn Fahrflächen-Segmente E4..E8 entsprechend einem Leistungsbedarf an das Kommissioniersystem stillgelegt oder in Betrieb genommen werden, ist es von Vorteil, wenn
ein erstes Fahrflächen-Segment E4..E8 vor einem zweiten Fahrflächen-Segment E4..E8 außer Betrieb genommen wird, wenn ein zwischen einem Lagerplatz C und einem Transferpunkt im ersten Fahrflächen-Segment E4..E8 verlaufender Transportweg auf einer ortsfesten Auslagerfördertechnik 4a länger ist als ein zwischen diesem Lagerplatz C und einem Transferpunkt im zweiten Fahrflächen-Segment E4..E8 verlaufender Transportweg auf der ortsfesten Auslagerfördertechnik 4a, und/oder
ein erstes Fahrflächen-Segment E4..E8 nach einem zweiten Fahrflächen-Segment E4..E8 in Betrieb genommen wird, wenn ein zwischen einem Lagerplatz C und einem Transferpunkt im ersten Fahrflächen-Segment E4..E8 verlaufender Transportweg auf einer ortsfesten Auslagerfördertechnik 4a länger ist als ein zwischen diesem Lagerplatz C und einem Transferpunkt im zweiten Fahrflächen-Segment E4..E8 verlaufender Transportweg auf der ortsfesten Auslagerfördertechnik 4a.

Sind in einer Phase geringer Leistungsanforderung alle benötigen Auftragswaren 2c beispielsweise in jener Ebene der Lagerbereiche B3..B7 verfügbar, die dem Fahrflächen-Segment E5 zugeordnet ist, dann ist es zweckmäßig bei Bedarf zuerst das Fahrflächen-Segment E8 außer Betrieb zu nehmen, dann das Fahrflächen-Segment E7 und so weiter. Die Inbetriebnahme erfolgt zweckmäßigerweise in umgekehrter Reihenfolge. Der Grund ist, dass der (kürzeste) Transportweg, welcher auf der ortsfesten Auslagerfördertechnik 4a von einem Lagerplatz C in der betreffenden Ebene in das Fahrflächen-Segment E5 verläuft, kürzer ist als ein auf der ortsfesten Auslagerfördertechnik 4a in das Fahrflächen-Segment E8 oder Fahrflächen-Segment E7 verlaufender (kürzester) Transportweg.

Ist der Warenübergabebereich D1, D2 in der Ebene des Fahrflächen-Segments E4 angeordnet und/oder befinden sich nur dort Palettierer 12a, 12b, dann ist es ebenfalls zweckmäßig, die Fahrflächen-Segmente E4..E8 beginnend beim Fahrflächen-Segment E8 außer Betrieb zu nehmen und in umgekehrter Reihenfolge wieder in Betrieb zu nehmen, sofern in den jeweils darunter liegenden Ebenen der Lagerbereiche B3..B7 alle in einer Phase geringer Leistungsanforderung benötigen Auftragswaren 2c verfügbar sind. Wird das Fahrflächen-Segment E8 außer Betrieb genommen, so sollten alle Auftragswaren 2c in den Ebenen verfügbar sein, die den Fahrflächen-Segmenten E4..E7 zugeordnet sind. Wird zusätzlich das Fahrflächen-Segment E7 außer Betrieb genommen, so sollten alle Auftragswaren 2c in den Ebenen verfügbar sein, die den Fahrflächen-Segmenten E4..E6 zugeordnet sind und so weiter.

Daraus resultiert nicht nur eine Energieeinsparung für die zu einem Fahrflächen-Segment E4..E8 hin oder von einem Fahrflächen-Segment E4..E8 weg führende, ortsfeste Auslagerfördertechnik 4a, sondern auch eine Wegeinsparung und damit eine Zeit-Einsparung beim Warentransport selbst. Das heißt, Auftragswaren 2c werden durch die zu einem Fahrflächen-Segment E4..E8 hin oder von einem Fahrflächen-Segment E4..E8 weg führende, ortsfeste Auslagerfördertechnik 4a nicht unnötig weit und auch nicht unnötig lange transportiert.

Um diese Strategie zu ermöglichen ist es auch zweckmäßig die Waren 2a nach ihrer Umschlagshäufigkeit beginnend mit hoher Umschlagshäufigkeit ("Schnelldreher") nach oben hin einzulagern, sodass im oberen Bereich Waren mit geringer Umschlagshäufigkeit ("Langsamdreher") gelagert sind.

Bei im Wesentlichen gleichwertigen Lösungen können die Fahrflächen-Segmente E4..E8 auch beliebig oder sogar zufällig außer oder in Betrieb genommen werden, insbesondere um eine gleichmäßige Abnutzung der autonomen Förderfahrzeuge 6i..6l zu erreichen.

Denkbar ist auch, dass bestimmte Fahrflächen-Segmente E4..E8 überhaupt nicht ohne Heber 18 erreichbar sind. Dann gelten die genannten Bedingungen für jeden Lagerplatz C im Kommissioniersystem, da der zu dem genannten Fahrflächen-Segment E4..E8 führende Transportweg für alle Lagerplätze C im Kommissioniersystem länger ist als der Transportweg zu Fahrflächen-Segmenten E4..E8, die auch ohne Heber 18 erreichbar sind.

Insbesondere sind unter den oben genannten Wegen generell jeweils die kürzesten Transportwege zu verstehen. Darüber hinaus gelten die genannten Bedingungen insbesondere für jeden Lagerplatz im Kommissioniersystem.

Die genannten, vorteilhaften Varianten im Hinblick auf die Außerbetriebnahme und Inbetriebnahme von Fahrflächen-Segmenten E4..E8 gelten natürlich nicht nur für vertikal übereinander angeordnete Fahrflächen-Segmente E4..E8, sondern auch für nebeneinander angeordnete Fahrflächen-Segmente E1..E3, wie sie in den Figuren 1 und 2 dargestellt sind. Die Transportwege verlaufen dann aber (vorwiegend) horizontal.

Das zu der Fig. 3 offenbarte Beispiel ist auf den warenausgangsseitigen Bereich des Kommissioniersystems bezogen. Selbstverständlich sind aber alle in dem Beispiel genannten Aspekte uneingeschränkt auch auf den wareneingangsseitigen Bereich des Kommissioniersystems anwendbar. Dabei wechselt lediglich die Transportrichtung (also in der Fig. 3 von links → rechts auf rechts → links). An die Stelle eines Palettierers 12a, 12b tritt ein Depalettierer 9, an die Stelle des Warenübergabebereichs D1, D2 der Warenübernahmebereich A1, an die Stelle des Einlagerns das Auslagern und so weiter.

Generell wird auch angemerkt, dass Palettierer 12a, 12b und/oder Depalettierer 9 in jedem Fahrflächen-Segment E4..E8 vorgesehen sein können oder nur in einigen davon. Vorzugsweise befindet sich ein Palettierer 12a, 12b und/oder Depalettierer 9 in der Ebene des Warenübergabebereichs D1, D2 beziehungsweise Warenübernahmebereichs A1.

Zudem kann ein Heber 18, 19, 20a, 20b gemeinsame Aufgaben übernehmen, auch wenn die Aufgaben für die Heber 18, 19, 20a, 20b in dem in Fig. 3 dargestellten Beispiel getrennt sind. Etwa könnte der Heber 18 vereinzelte Ware 2a und Gruppenware 2c befördern, und der Heber 19 könnte sowohl autonome Förderfahrzeuge 6i..6l als auch Paletten befördern. Auch könnten Heber eingesetzt werden, die alle Aufgaben übernehmen können.

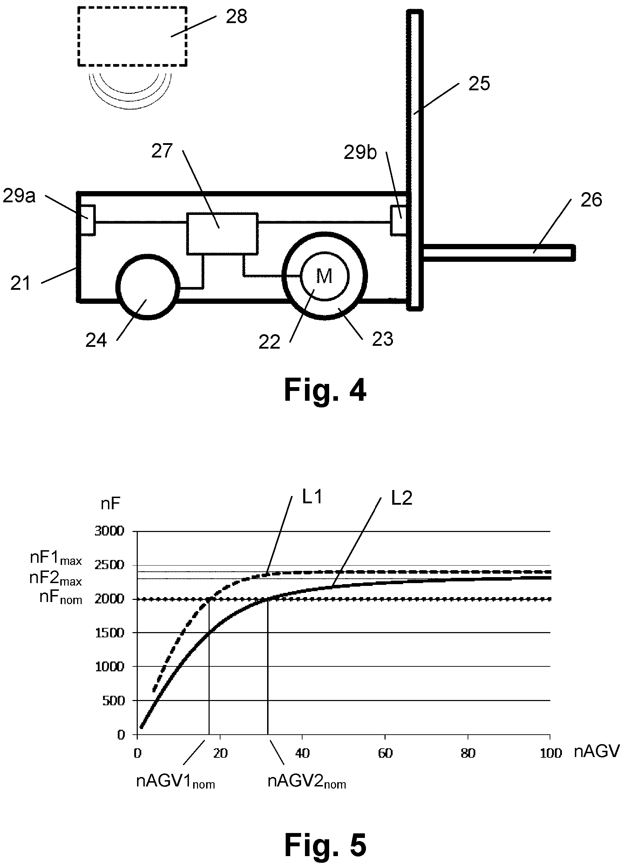

Fig. 4 zeigt nun ein schematisch dargestelltes Beispiel für ein autonomes Förderfahrzeug 5a..5l, 6a..6h. Das autonome Förderfahrzeug 5a..5l, 6a..6h weist ein Fahrgestell 21 auf, an dem Räder 23, 24 drehbar gelagert sind. Zumindest eines der Räder 23 ist mit einem Antrieb 22 gekuppelt, und zumindest eines der Räder 24 ist lenkbar. Nach gezeigter Ausführung sind beide Räder 23 mit dem Antrieb 22 gekuppelt und werden durch diesen angetrieben, und beide Räder 24 sind lenkbare Räder. Das Förderfahrzeug 5a..5l, 6a..6h kann aber auch nur drei Räder 23, 24 umfassen, wovon die Räder 23 angetrieben sind und das Rad 24 lenkbar ist. Zudem umfasst das autonome Förderfahrzeug 5a..5l, 6a..6h eine Transportplattform 26, auf der die zu transportierenden Waren/Auftragswaren 2a..2c temporär aufgenommen werden können. Nach gezeigter Ausführung ist die Transportplattform 26 relativ gegenüber dem Fahrgestell 21 verstellbar. Das autonome Förderfahrzeug 5a..5l, 6a..6h kann hierfür eine Vertikalführung 25 mit einer daran befestigten und vertikal verfahrbaren Transportplattform 26 aufweisen, so wie das in der Fig. 4 dargestellt ist. Die Transportplattform 26 kann auch seitlich beziehungsweise nach vorne verschiebbar sein, um Waren/Auftragswaren 2a..2c leichter auf einem Lagerplatz C abzusetzen oder von dort aufzunehmen. Die Transportplattform 26 könnte aber auch eine fixe ebene Fläche am autonomen Förderfahrzeug 5a..5l, 6a..6h sein. Weiterhin umfasst ein autonomes Förderfahrzeug 5a..5l, 6a..6h auch eine Fahrsteuerung 27 zum Empfang von Befehlen von einer übergeordneten Steuerung 28 (welche beispielsweise den Auftragsrechner beinhalten kann) und zum Steuern/Regeln der Bewegungen des autonomen Förderfahrzeugs 5a..5l, 6a..6h. Schließlich umfasst ein autonomes Förderfahrzeug 5a..5l, 6a..6h Sensoren 29a, 29b zum Erfassen der Umgebung des autonomen Förderfahrzeugs 5a..5l, 6a..6h und zur Orientierung im Raum. Das in der Fig. 4 dargestellte autonome Förderfahrzeug 5a..5l, 6a..6h weist lenkbare Räder 24 auf. Diese können aber entfallen, sofern das autonome Förderfahrzeug 5a..5l, 6a..6h über Räder verfügt, mit denen auch eine Seitwärtsbewegung ausgeführt werden kann (z.B. Mecanum-Räder).

In der Fig. 5 ist nun die Leistungsfähigkeit des neu vorgeschlagenen Kommissioniersystems mit segmentierter Fahrfläche im Vergleich zu einem herkömmlichen Kommissioniersystem mit unsegmentierter Fahrfläche dargestellt. Konkret zeigt die Fig. 5 ein Diagramm, in dem die Anzahl der pro Zeit erfolgten Transportvorgänge/Fahrten (also der Durchsatz) nF über der Anzahl der autonomen Förderfahrzeuge nAGV dargestellt ist. In dem Diagramm sind die Leistungskurve L1 des neu vorgeschlagenen Kommissioniersystems und die Leistungskurve L2 des herkömmlichen Kommissioniersystems im Vergleich dargestellt.

In dem Beispiel ist angenommen, dass das neuartige Kommissioniersystem 1 vier Fahrflächen-Segmente E1..E8 aufweist, wobei pro Fahrflächen-Segment E1..E8 drei Startpunkte und ein Zielpunkt vorgesehen sind. Insgesamt gibt es demnach zwölf Startpunkte und vier Zielpunkte. Beispielsweise können als Startpunkte Auslager-Übergabestationen 11 und als Endpunkte Arbeitsplätze zum Kommissionieren der Auftragswaren 2c vorgesehen sein. An einem Endpunkt kann insbesondere ein (automatischer) Palettierer 12a, 12b vorgesehen sein.

Für das herkömmliche Kommissioniersystem wird eine unsegmentierte, flächengleiche Fahrfläche mit derselben Anzahl an Startpunkten und Zielpunkten vorgesehen, also eine Fahrfläche mit zwölf Startpunkten und vier Zielpunkten.

Unter der vereinfachten Annahme, dass die Fahrflächen-Segmente E1..E8 und die unsegmentierte Fahrfläche einen quadratischen Grundriss haben, ergibt sich im neuen Kommissioniersystem innerhalb eines Fahrflächen-Segments E1..E8 ein maximaler Fahrweg für die autonomen Förderfahrzeuge 5a..5l, 6a..6h, der halb so lang ist wie der maximale Fahrweg im herkömmlichen Kommissioniersystem. In diesem Beispiel wird in einem Fahrflächen-Segment E1..E8 des neuen Kommissioniersystems ein maximaler Fahrweg von 10 m angenommen, welcher der Diagonale in einem rund 7x7 m großem Fahrflächen-Segment E1..E8 entspricht. Die Fahrfläche im herkömmlichen Kommissioniersystem ist viermal so groß und hat demnach eine Seitenlänge von rund 14x14 m. Der maximale Fahrweg, also die Diagonale in der Fahrfläche, beträgt 20 m. Da die Fahrzeuggeschwindigkeit im neuen und im herkömmlichen Kommissioniersystem als gleich groß angenommen wird, brauchen die autonomen Förderfahrzeuge 5a..5l, 6a..6h im herkömmlichen Kommissioniersystem durchschnittlich länger für den Warentransport als im neuen Kommissioniersystem 1.

Aus dem Diagramm ist nun deutlich zu sehen, dass der Durchsatz nF in dem neu vorgeschlagenen Kommissioniersystem 1 bei jeder Anzahl an autonomen Förderfahrzeugen 5a..5l, 6a..6h höher ist als jener im herkömmlichen Kommissioniersystem. Aus dem Diagramm wird auch deutlich, dass der maximal zu erzielende Durchsatz nF1ₘₐₓ in dem neuen Kommissioniersystem 1 ebenfalls höher ist als jener im herkömmlichen Kommissioniersystem. Der maximal zu erzielende Durchsatz liegt in dem neuen Kommissioniersystem 1 bei rund nF1ₘₐₓ = 2400 Fahrten/h, im herkömmlichen Kommissioniersystem bei rund nF2ₘₐₓ = 2300 Fahrten/h. Die relativ teuren Palettierer 12a, 12b können im neuen Kommissioniersystem 1 daher prinzipbedingt besser ausgelastet werden als im herkömmlichen Kommissioniersystem. Die Kosten pro Kommissionierauftrag werden durch das neue Kommissioniersystem 1 daher nicht nur aufgrund des geringeren Bedarfs an autonomen Förderfahrzeugen 5a..5l, 6a..6h sondern auch wegen der besseren Auslastung der Palettierer 12a, 12b deutlich gesenkt.

Abgesehen davon, dass das neue Kommissioniersystem 1 bei gleicher Anzahl an autonomen Förderfahrzeugen 5a..5l, 6a..6h und bei derselben Anzahl an Palettierern 12a, 12b offensichtlich deutlich leistungsfähiger ist als das herkömmliche Kommissioniersystem, ergibt sich noch ein wesentlicher Vorteil, nämlich bei der Erweiterung eines Kommissioniersystems. Kommissioniersysteme werden üblicherweise nicht so ausgelegt, dass sie gerade die Anforderungen eines Kunden erfüllen, sondern besitzen in der Regel Leistungsreserven. Auf diese Weise kann das Kommissioniersystem bei erhöhtem Leistungsbedarf relativ leicht erweitert werden.

In dem dargestellten Beispiel ist angenommen, dass die Nennleistung des Kommissioniersystems auf der Fahrfläche auf nFₙₒₘ = 2000 Fahrten/h gesetzt ist. Im herkömmlichen Kommissioniersystem wird diese Leistung mit rund nAGV2ₙₒₘ = 32 autonomen Fahrzeugen erreicht, im neuen Kommissioniersystem 1 dagegen bereits mit nAGV2ₙₒₘ = 18 autonomen Fahrzeugen 5a..5l, 6a..6h, also rechnerisch mit 4,5 Fahrzeugen 5a..5l, 6a..6h pro Fahrflächen-Segment E1..E8. Der Bedarf an autonomen Fahrzeugen 5a..5l, 6a..6h beträgt in diesem Beispiel für das neue Kommissioniersystem 1 also bloß rund 56% der im herkömmlichen Kommissioniersystem benötigten autonomen Fahrzeuge. Wegen der geringeren Fahrzeugdichte in den Fahrflächen-Segmenten E1..E8 ist im neuen Kommissioniersystem 1 auch die Kollisionswahrscheinlichkeit und Kollisionsrate geringer als im herkömmlichen Kommissioniersystem.

Ein erhöhter Leistungsbedarf kann nun bis zu einem gewissen Grad (konkret bis zum maximal zu erzielenden Durchsatz nF1ₘₐₓ bzw. nF2ₘₐₓ) durch Hinzufügen von autonomen Fahrzeugen 5a..5l, 6a..6h gedeckt werden. Aus dem Diagramm wird deutlich, dass der Gewinn pro hinzugefügtem autonomen Fahrzeug 5a..5l, 6a..6h im neuen Kommissioniersystem 1 deutlich größer ist als im herkömmlichen Kommissioniersystem, da die Steigung der Leistungskurve L1 im Betriebspunkt des neuen Kommissioniersystems 1 deutlich größer ist als im herkömmlichen Kommissioniersystem. Das bedeutet, dass das neue Kommissioniersystem 1 mit geringeren Kosten erweitert werden kann als das herkömmliche Kommissioniersystem.

Werden dem neuen Kommissioniersystem 1 ausgehend vom Betriebspunkt zwei autonome Fahrzeuge 5a..5l, 6a..6h hinzugefügt, so wird damit ein Gewinn von rund 200 Fahrten/h erreicht, und der Gesamtdurchsatz erhöht sich auf rund 2200 Fahrten/h. Im herkömmlichen Kommissioniersystem beträgt der mit zwei autonomen Fahrzeugen erzielte Gewinn dagegen bloß rund 20 Fahrten/h, wodurch der Gesamtdurchsatz auf rund 2020 Fahrten/h erhöht wird. Der im Betriebspunkt pro hinzugefügtem autonomen Fahrzeug 5a..5l, 6a..6h erzielte Gewinn ist also im neuen Kommissioniersystem 1 rund 10-fach höher als im herkömmlichen Kommissioniersystem. Das neue Kommissioniersystem 1 ist daher besser skalierbar.

Werden in dem genannten Beispiel Investitionskosten von EUR 20.000,- für ein autonomes Förderfahrzeug 5a..5l, 6a..6h angenommen, so betragen die Investitionskosten im neuen Kommissioniersystem EUR 360.000,- und im herkömmlichen Kommissioniersystem EUR 640.000,-. Bei der zeitlichen Entwicklung der für die autonomen Förderfahrzeuge 5a..5l, 6a..6h aufgewendeten Kosten wird angenommen, dass die jährlichen Betriebskosten für die autonomen Förderfahrzeuge 5a..5l, 6a..6h 10% der Investitionskosten für die autonomen Förderfahrzeuge 5a..5l, 6a..6h betragen. Wird angenommen, dass die autonomen Förderfahrzeuge 5a..5l, 6a..6h zehn Jahre in Betrieb sind, betragen die Gesamtkosten EUR 720.000,- gegenüber EUR 1.280.000,-. Im Laufe der Zeit verdoppelt sich also die durch das neu vorgeschlagene Kommissioniersystem 1 erzielte Einsparung.

Insgesamt ist das neue Kommissioniersystem 1 aus den genannten Gründen bei gleicher Leistung deutlich billiger und deutlich besser skalierbar.

Abschließend wird festgehalten, dass der Schutzbereich durch die Patentansprüche bestimmt ist. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### Bezugszeichenaufstellung

- 1: Kommissioniersystem
- 2a, 2b: Waren
- 2c: Auftragswaren
- 3: Einlagerfördertechnik
- 3a: ortsfester Teil der Einlagerfördertechnik
- 3b: nicht ortsfester Teil der Einlagerfördertechnik

- 4: Auslagerfördertechnik
- 4a: ortsfester Teil der Auslagerfördertechnik
- 4b: nicht ortsfester Teil der Auslagerfördertechnik
- 5a..5e: autonomes Förderfahrzeug für Paletten
- 6a..6h: autonomes Förderfahrzeug für vereinzelte Waren

- 7: Lagerregal
- 8: schienengebundenes Regalbediengerät
- 9: Einlager-Übergabestationen / Depalettierer
- 10: Einlager-Rollenförderer
- 11: Auslager-Übergabestation
- 12a, 12b: Palettierer

- 13: Wand des Gebäudes
- 14a, 14b: Tore zwischen Fahrflächen-Segmenten
- 15a, 15b: Kurzzeit-Zwischenlager/Puffer
- 16: Wareneingang
- 17a, 17b: Warenausgang
- 18: Heber für vereinzelte Ware
- 19: Heber für autonome Förderfahrzeuge
- 20a, 20b: Heber für Gruppenware

- 21: Fahrgestell
- 22: Antrieb
- 23: angetriebenes Rad
- 24: lenkbares Rad
- 25: Vertikalführung
- 26: Transportplattform
- 27: elektronische Fahrsteuerung
- 28: übergeordnete Steuerung
- 29a, 29b: Sensor

- A1: Warenübernahmebereich
- B1..B7: Lagerbereich
- C: Lagerplatz
- D1, D2: Warenübergabebereich
- E1..E8: Fahrflächen-Segment
- F1..F3: Fahrbereich
- G1..G8: Transferbereich

- nF: Anzahl der Fahrten/Transportvorgänge pro Zeiteinheit (Stunde)
- nF1ₘₐₓ: maximaler Durchsatz neues Kommissioniersystem
- nF2ₘₐₓ: maximaler Durchsatz herkömmliches Kommissioniersystem
- nFₙₒₘ: Nenndurchsatz/Nennleistung

- nAGV: Anzahl der autonomen Förderfahrzeuge
- nAGV1ₙₒₘ: Anzahl Förderfahrzeuge beim Betriebspunkt neues System
- nAGV2ₙₒₘ: Anzahl Förderfahrzeuge beim Betriebspunkt herkömmliches System
- L1: Leistungskurve des herkömmlichen Kommissioniersystems
- L2: Leistungskurve des neuen Kommissioniersystems

## Patentansprüche

1. Verfahren zum Betrieb eines Kommissioniersystems (1) zum Kommissionieren von Waren (2a, 2b), umfassend die Schritte
Transportieren der Waren (2a, 2b) von einem Warenübernahmebereich (A1) zu einem Lagerbereich (B 1..B7) und Einlagern der Waren in diesen Lagerbereich (B 1..B7) durch eine Einlagerfördertechnik (3), wobei der Lagerbereich (B1..B7) eine Vielzahl an Lagerplätzen (C) zum Lagern der Waren (2a, 2b) aufweist,
Erfassen eines Kommissionierauftrags und Bestimmen von Auftragswaren (2c), welche für den Kommissionierauftrag benötigt werden, durch einen Auftragsrechner, und
Auslagern der Auftragswaren (2c) aus dem Lagerbereich (B1..B7) und Transportieren der Auftragswaren (2c) vom Lagerbereich (B1..B7) zu einem Warenübergabebereich (D1, D2) durch eine Auslagerfördertechnik (4),
wobei der Transport der Waren (2a, 2b) mittels der Einlagerfördertechnik (3) und/oder der Transport der Auftragswaren (2c) mittels der Auslagerfördertechnik (4) zumindest teilweise durch eine Vielzahl an autonomen Förderfahrzeugen (5a..5l, 6a..6h) durchgeführt wird, welche auf einer Fahrfläche fahren,
wobei Fahrbewegungen der autonomen Förderfahrzeuge (5a..5l, 6a..6h) in Fahrflächen-Segmenten (E1..E8), welche die Fahrfläche unterteilen, jeweils überwiegend von einer geschlossenen Gruppe an autonomen Förderfahrzeugen (5a..5l, 6a..6h) durchgeführt werden, und
wobei die Fahrbewegungen in den Fahrflächen-Segmenten (E1..E8) von einer Steuerung (28) koordiniert werden,
**dadurch gekennzeichnet, dass**
in einer Gruppe nicht benötigte autonome Förderfahrzeuge (5a..5l, 6a..6h) im Zuge eines Austauschs von autonomen Förderfahrzeugen (5a..5l, 6a..6h) einer anderen Gruppe zur Verfügung gestellt werden, in der ein Engpass an autonomen Förderfahrzeugen (5a..5l, 6a..6h) herrscht,
wobei der Austausch an autonomen Förderfahrzeugen (5a..5l, 6a..6h) zwischen zwei verschiedenen Fahrflächen-Segmenten (E1..E8) maximal 10% der auf der Fahrfläche durchgeführten Fahrten betrifft, und
wobei der Austausch von autonomen Förderfahrzeugen (5a..5l, 6a..6h) über Verbindungswege zwischen den Fahrflächen-Segmenten (E1..E8) stattfindet.

2. Verfahren nach Anspruch 1, **dadurch gekennzeichnet, dass** in den Fahrflächen-Segmenten (E1..E8) unterschiedliche Temperaturen herrschen.

3. Verfahren nach einem der Ansprüche 1 oder 2, **dadurch gekennzeichnet, dass** in einem ersten Fahrflächen-Segment (E1) autonome Förderfahrzeuge (5a, 5b) einer ersten Bauart und in einem zweiten Fahrflächen-Segment (E2) autonome Förderfahrzeuge (6a..6c) einer zweiten, anderen Bauart operieren.

4. Verfahren nach einem der Ansprüche 1 bis 3, **dadurch gekennzeichnet, dass** in einem ersten Fahrflächen-Segment (E1) autonome Förderfahrzeuge (5a, 5b) mit einer ersten Maximal-Geschwindigkeit und in einem zweiten Fahrflächen-Segment (E2) autonome Förderfahrzeuge (6a..6c) mit einer zweiten, anderen Maximal-Geschwindigkeit operieren.

5. Verfahren nach einem der Ansprüche 1 bis 4, **dadurch gekennzeichnet, dass** ein erstes Fahrflächen-Segment (E1) in einem Normalbetrieb des Kommissioniersystems (1) frei für den Zugang von Menschen ist und dass ein zweites Fahrflächen-Segment (E2) im Normalbetrieb des Kommissioniersystems (1) für den Zugang durch Menschen gesperrt ist.

6. Verfahren nach einem der Ansprüche 1 bis 5, **dadurch gekennzeichnet, dass** die Waren (2a, 2b) in einem ersten Lagerbereich (B1) vereinzelt und in einem zweiten Lagerbereich (B2) in Gruppen gelagert werden.

7. Verfahren nach Anspruch 6, **dadurch gekennzeichnet, dass** die Waren/Auftragswaren (2a..2c) durch die autonomen Förderfahrzeuge (5c..5e, 6d..6h) in einem Fahrflächen-Segment (E3) sowohl vereinzelt als auch in Gruppen transportiert werden.

8. Verfahren nach Anspruch 6, **dadurch gekennzeichnet, dass** die Waren/Auftragswaren (2a..2c) durch die autonomen Förderfahrzeuge (5a, 5b) in einem ersten Fahrflächen-Segment (E1) nur in Gruppen und in einem zweiten Fahrflächen-Segment (E2) nur vereinzelt transportiert werden.

9. Verfahren nach einem der Ansprüche 1 bis 8, **dadurch gekennzeichnet, dass** ein Verhältnis zwischen einer Anzahl der auf einem Fahrflächen-Segment (E1..E8) befindlichen autonomen Förderfahrzeuge (5c..5e, 6d..6h) und einer Anzahl an Transferpunkten auf diesem Fahrflächen-Segment (E1..E8), welche Schnittstellen zwischen den autonomen Förderfahrzeugen (5c..5e, 6d..6h) und einer ortsfesten Fördertechnik (3a, 4a) oder einem Lagerbereich (B1..B7) darstellen, unter 5 liegt.

10. Verfahren nach einem der Ansprüche 1 bis 9, **dadurch gekennzeichnet, dass** Fahrflächen-Segmente (E1..E8) entsprechend einem Leistungsbedarf an das Kommissioniersystem (1) stillgelegt oder in Betrieb genommen werden.

11. Verfahren nach Anspruch 10, **dadurch gekennzeichnet, dass**
ein erstes Fahrflächen-Segment (E1..E8) vor einem zweiten Fahrflächen-Segment (E1..E8) außer Betrieb genommen wird, wenn ein zwischen einem Lagerplatz (C) und einem Transferpunkt im ersten Fahrflächen-Segment (E1..E8) verlaufender Transportweg auf einer ortsfesten Fördertechnik (3a, 4a) länger ist als ein zwischen diesem Lagerplatz (C) und einem Transferpunkt im zweiten Fahrflächen-Segment (E1..E8) verlaufender Transportweg auf der ortsfesten Fördertechnik (3a, 4a), und/oder
ein erstes Fahrflächen-Segment (E1..E8) nach einem zweiten Fahrflächen-Segment (E1..E8) in Betrieb genommen wird, wenn ein zwischen einem Lagerplatz (C) und einem Transferpunkt im ersten Fahrflächen-Segment (E1..E8) verlaufender Transportweg auf einer ortsfesten Fördertechnik (3a, 4a) länger ist als ein zwischen diesem Lagerplatz (C) und einem Transferpunkt im zweiten Fahrflächen-Segment (E1..E8) verlaufender Transportweg auf der ortsfesten Fördertechnik (3a, 4a).

12. Verfahren nach einem der Ansprüche 1 bis 11, **dadurch gekennzeichnet, dass**
die Fahrgeschwindigkeit der autonomen Förderfahrzeuge (5a..5l, 6a..6h) in einem Fahrflächen-Segment (E1..E8), in dem eine Störung vorliegt, gegenüber dem Normalbetrieb verringert wird oder die autonomen Förderfahrzeuge (5a..5l, 6a..6h) dort stillgesetzt werden, und
der Normalbetrieb in jenen Fahrflächen-Segmenten (E1..E8) aufrechterhalten wird, in denen keine Störung vorliegt.

13. Kommissioniersystem (1) zum Kommissionieren von Waren (2a, 2b), umfassend
einen Warenübernahmebereich (A1) und einen Warenübergabebereich (D1, D2),
einen Lagerbereich (B 1..B7) mit einer Vielzahl an Lagerplätzen (C) zum Lagern der Waren (2a, 2b) ,
eine den Warenübernahmebereich (A1) und den Lagerbereich (B1..B7) verbindende Einlagerfördertechnik (3), welche zum Transportieren der Waren (2a, 2b) vom Warenübernahmebereich (A1) zum Lagerbereich (B1..B7) und zum Einlagern der Waren (2a, 2b) in den Lagerbereich (B1..B7) ausgebildet ist,
einen Auftragsrechner zum Erfassen eines Kommissionierauftrags und zum Bestimmen von Auftragswaren (2c), welche für den Kommissionierauftrag benötigt werden, und
eine den Lagerbereich (B1..B7) und den Warenübergabebereich (D1, D2) verbindende Auslagerfördertechnik (4), welche zum Auslagern der Auftragswaren (2c) aus dem Lagerbereich (B1..B7) und zum Transportieren der Auftragswaren (2c) vom Lagerbereich (B1..B7) zum Warenübergabebereich (D1, D2) ausgebildet ist,
wobei die Einlagerfördertechnik (3) und/oder die Auslagerfördertechnik (4) eine Vielzahl an autonomen Förderfahrzeugen (5a..5l, 6a..6h) zum Transport der Waren (2a, 2b) / Auftragswaren (2c) auf einer Fahrfläche aufweist,
wobei die Fahrfläche in mehrere Fahrflächen-Segmente (E1..E8) unterteilt ist und eine Steuerung (28) vorgesehen ist, welche zur Koordinierung der Fahrbewegungen der autonomen Förderfahrzeuge (5a..5l, 6a..6h) in den Fahrflächen-Segmenten (E1..E8) eingerichtet ist, und
wobei die Fahrbewegungen in den Fahrflächen-Segmenten (E1..E8) jeweils überwiegend von einer geschlossenen Gruppe an autonomen Förderfahrzeugen (5a..5l, 6a..6h) durchgeführt werden,
**dadurch gekennzeichnet, dass**
in einer Gruppe nicht benötigte autonome Förderfahrzeuge (5a..5l, 6a..6h) im Zuge eines Austauschs von autonomen Förderfahrzeugen (5a..5l, 6a..6h) einer anderen Gruppe zur Verfügung gestellt werden, in der ein Engpass an autonomen Förderfahrzeugen (5a..5l, 6a..6h) herrscht,
wobei der Austausch an autonomen Förderfahrzeugen (5a..5l, 6a..6h) zwischen zwei verschiedenen Fahrflächen-Segmenten maximal 10% der auf der Fahrfläche durchgeführten Fahrten betrifft, und
wobei der Austausch von autonomen Förderfahrzeugen (5a..5l, 6a..6h) über Verbindungswege zwischen den Fahrflächen-Segmenten (E1..E8) stattfindet.

14. Kommissioniersystem (1) nach Anspruch 13, **dadurch gekennzeichnet, dass** die Fahrflächen-Segmente (E1..E8) baulich voneinander getrennt sind.

15. Kommissioniersystem (1) nach Anspruch 14, **dadurch gekennzeichnet, dass** mehrere Fahrflächen-Segmente (E4..E8) vertikal übereinander in unterschiedlichen Ebenen angeordnet sind.

16. Kommissioniersystem (1) nach Anspruch 15, **dadurch gekennzeichnet, dass** zumindest in einem Teil der Fahrflächen-Segmente (E4..E8) unterschiedliche Temperaturen herrschen und auf einem unterem Fahrflächen-Segment (E4..E8) eine niedrigere Temperatur herrscht als auf einem oberen Fahrflächen-Segment (E4..E8).

17. Kommissioniersystem (1) nach Anspruch 14 bis 16, **dadurch gekennzeichnet, dass** mehrere Fahrflächen-Segmente (E1..E3) durch Wände (13) baulich voneinander getrennt sind.

18. Kommissioniersystem (1) nach einem der Ansprüche 13 bis 17, **dadurch gekennzeichnet, dass** im Bereich eines Fahrflächen-Segments (E4..E8) ein Kurzzeit-Zwischenlager/Puffer (15a, 15b) angeordnet ist.

19. Kommissioniersystem (1) nach Anspruch 18, **dadurch gekennzeichnet, dass** mehrere Fahrflächen-Segmente (E4..E8) durch Lagerregale (7) baulich voneinander getrennt sind, wobei die Lagerregale (7) vom Kurzzeit-Zwischenlager/Puffer (15a) umfasst sind oder dieses bilden und wobei die Lagerregale (7) von einem angrenzenden Fahrflächen-Segment (E4..E8) zugänglich sind.

20. Kommissioniersystem (1) nach Anspruch 18, **dadurch gekennzeichnet, dass** mehrere Fahrflächen-Segmente (E4..E8) durch Lagerregale (7) baulich voneinander getrennt sind, wobei die Lagerregale (7) vom Kurzzeit-Zwischenlager/Puffer (15a) umfasst sind oder dieses bilden und wobei die Lagerregale (7) von mehreren angrenzenden Fahrflächen-Segmenten (E4..E8) zugänglich sind.

21. Kommissioniersystem (1) nach einem der Ansprüche 13 bis 20, **dadurch gekennzeichnet, dass**
der Lagerbereich (B1..B7) Lagerregale (7) umfasst,
Lagerplätze (C) in den Lagerregalen (7) vorgesehen ist, und
ein schienengebundenes Regalbediengerät (8) vorgesehen ist, mittels welchem die Lagerplätze (C) in den Lagerregalen (7) zugreifbar sind, wobei die Einlagerfördertechnik (3) und/oder die Auslagerfördertechnik (4) das Regalbediengerät (8) umfasst, und wobei dem Regalbediengerät (8) im Verlauf der Einlagerfördertechnik (3) eine ortsfeste Einlager-Übergabestation (9) eines ortsfesten Teils (3a) der Einlagerfördertechnik (3) vorgelagert ist, welche zur Übergabe der Waren (2a, 2b) von den autonomen Förderfahrzeugen (5a, 5b) auf die ortsfeste Einlager-Übergabestation (9) ausgebildet ist und/oder dem Regalbediengerät (8) im Verlauf der Auslagerfördertechnik (4) eine ortsfeste Auslager-Übergabestation (11) eines ortsfesten Teils (4a) der Auslagerfördertechnik (4) nachgelagert ist, welche zur Übergabe der Auftragswaren (2c) von der Auslager-Übergabestation (11) auf die autonomen Förderfahrzeuge (5c..5e, 6a..6h) ausgebildet ist.

22. Kommissioniersystem (1) nach einem der Ansprüche 13 bis 21, **dadurch gekennzeichnet, dass** im Verlauf der Auslagerfördertechnik (4) zumindest ein Arbeitsplatz (12a, 12b) zum Kommissionieren der Auftragswaren (2c) in oder auf Versand-Warenträger angeordnet ist.

23. Kommissioniersystem (1) nach einem der Ansprüche 13 bis 22, **dadurch gekennzeichnet, dass** im Verlauf der Einlagerfördertechnik (3) zumindest ein Stellplatz zum Bereitstellen der Waren (2a, 2b) auf Liefergebinden und/oder eine Vereinzelungsvorrichtung (9) zum Bereitstellen vereinzelter Waren (2a) angeordnet ist.

## Claims

1. A method for operating a picking system (1) for picking goods (2a, 2b), comprising the steps
transporting the goods (2a, 2b) from a goods acceptance zone (A1) to a storage zone (B1..B7) and storing the goods in this storage zone (B1..B7) by a storage conveying system (3), wherein the storage zone (B1..B7) has a plurality of storage areas (C) for storing the goods (2a, 2b),
acquiring a picking order and determining ordered goods (2c) which are required for the picking order, by an order processing computer, and
retrieving the ordered goods (2c) from the storage zone (B1..B7) and transporting the ordered goods (2c) from the storage zone (B1..B7) to a goods transfer zone (D1, D2) by a retrieval conveying system (4),
wherein the transport of the goods (2a, 2b) is executed by the storage conveying system (3) and/or the transport of the ordered goods (2c) is executed by the retrieval conveying system (4) at least in part by a plurality of autonomous conveying vehicles (5a..5l, 6a..6h) driving on a driving surface,
wherein driving movements of the autonomous conveying vehicles (5a..5l, 6a..6h) in driving surface segments (E1..E8), which subdivide the driving surface, are each executed for the most part by a closed group of autonomous conveying vehicles (5a..5l, 6a..6h), and
wherein the driving movement in the driving surface segments (E1..E8) are coordinated by a control (28),
**characterized in that**
autonomous conveying vehicles (5a..5l, 6a..6h) which are not required in one group are made available in the course of an exchange of autonomous conveying vehicles (5a..5l, 6a..6h) to another group in which there is a bottleneck of autonomous conveying vehicles (5a..5l, 6a..6h),
wherein an exchange of autonomous conveying vehicles (5a..5l, 6a..6h) between two different driving surface segments (E1..E8) concerns a maximum of 10% of the journeys executed on the driving surface, and
wherein the exchange of autonomous conveying vehicles (5a..5l, 6a..6h) is executed via connecting paths between the driving surface segments (E1..E8).

2. The method according to claim 1, **characterized in that** there are different temperatures in the driving surface segments (E1..E8).

3. The method according to one of claims 1 or 2, **characterized in that** autonomous conveying vehicles (5a, 5b) of a first design operate in a first driving surface segment (E1) and autonomous conveying vehicles (6a..6c) of a second, different design operate in a second driving surface segment (E2).

4. The method according to one of claims 1 to 3, **characterized in that** autonomous conveying vehicles (5a, 5b) with a first maximum speed operate in a first driving surface segment (E1) and autonomous conveying vehicles (6a..6c) with a second, different maximum speed operate in a second driving surface segment (E2).

5. The method according to one of claims 1 to 4, **characterized in that** a first driving surface segment (E1) is free for the access of persons during normal operation of the picking system (1) and that a second driving surface segment (E2) is blocked from the access by persons during normal operation of the picking system (1).

6. The method according to one of claims 1 to 5, **characterized in that** the goods (2a, 2b) are stored separated in a first storage zone (B1) and in groups in a second storage zone (B2).

7. The method according to claim 6, **characterized in that** the goods / ordered goods (2a..2c) are transported both separated and in groups by the autonomous conveying vehicles (5c..5e, 6d..6h) in a driving surface segment (E3).

8. The method according to claim 6, **characterized in that** the goods / ordered goods (2a..2c) are transported by the autonomous conveying vehicles (5a, 5b) only in groups in a first driving surface segment (E1) and only separated in a second driving surface segment (E2).

9. The method according to one of claims 1 to 8, **characterized in that** a relation between a number of the autonomous conveying vehicles (5c..5e, 6d..6h) located on a driving surface segment (E1..E8) and a number of transfer points on this driving surface segment (E1..E8), which constitute interfaces between the autonomous conveying vehicles (5c..5e, 6d..6h) and a stationary conveying system (3a, 4a) or a storage zone (B1..B7), is below 5.

10. The method according to one of claims 1 to 9, **characterized in that** driving surface segments (E1..E8) are shut down or put into operation on the basis of a performance demand from the picking system (1).

11. The method according to claim 10, **characterized in that**
a first driving surface segment (E1..E8) is put out of operation before a second driving surface segment (E1..E8) when a transport path on a stationary conveying system (3a, 4a) running between a storage area (C) and a transfer point in the first driving surface segment (E1..E8) is longer than a transport path on the stationary conveying system (3a, 4a) running between this storage area (C) and a transfer point in the second driving surface segment (E1..E8), and/or
a first driving surface segment (E1..E8) is put into operation after a second driving surface segment (E1..E8) when a transport path on a stationary conveying system (3a, 4a) running between a storage area (C) and a transfer point in the first driving surface segment (E1..E8) is longer than a transport path on the stationary conveying system (3a, 4a) running between this storage area (C) and a transfer point in the second driving surface segment (E1..E8).

12. The method according to one of claims 1 to 11, **characterized in that**
the driving speed of the autonomous conveying vehicles (5a..5l, 6a..6h) in a driving surface segment (E1..E8) in which a failure has occurred is reduced compared to the normal operation or the autonomous conveying vehicles (5a..5l, 6a..6h) there are stopped, and
the normal operation is perpetuated in those driving surface segments (E1..E8) in which no failure has occurred.

13. A picking system (1) for picking goods (2a, 2b), comprising
a goods acceptance zone (A1) and a goods transfer zone (D1, D2),
a storage zone (B1..B7) with a plurality of storage areas (C) for storing the goods (2a, 2b),
a storage conveying system (3) connecting the goods acceptance zone (A1) and the storage zone (B1..B7), wherein the storage conveying system (3) is configured for transporting the goods (2a, 2b) from the goods acceptance zone (A1) to the storage zone (B1..B7) and for storing the goods (2a, 2b) into the storage zone (B1..B7),
an order processing computer for acquiring a picking order and for determining ordered goods (2c) required for the picking order, and
a retrieval conveying system (4) connecting the storage zone (B1..B7) and the goods transfer zone (D1, D2), wherein the retrieval conveying system (4) is configured for retrieving the ordered goods (2c) from the storage zone (B 1..B7) and for transporting the ordered goods (2c) from the storage zone (B1..B7) to the goods transfer zone (D1, D2),
wherein the storage conveying system (3) and/or the retrieval conveying system (4) has a plurality of autonomous conveying vehicles (5a..5l, 6a..6h) for transporting the goods (2a, 2b) / ordered goods (2c) on a driving surface,
wherein the driving surface is subdivided into multiple driving surface segments (E1..E8) and a control (28) is provided, wherein the control (28) is adapted for coordinating the driving movements of the autonomous conveying vehicles (5a..5l, 6a..6h) in the driving surface segment (E1..E8), and
wherein the driving movements in the driving surface segments (E1..E8) are each executed for the most part by a closed group of autonomous conveying vehicles (5a..5l, 6a..6h),
**characterized in that**
autonomous conveying vehicles (5a..5l, 6a..6h) which are not required in one group are made available in the course of an exchange of autonomous conveying vehicles (5a..5l, 6a..6h) to another group in which there is a bottleneck of autonomous conveying vehicles (5a..5l, 6a..6h),
wherein the exchange of autonomous conveying vehicles (5a..5l, 6a..6h) between two different driving surface segments concerns a maximum of 10% of the journeys executed on the driving surface, and
wherein the exchange of autonomous conveying vehicles (5a..5l, 6a..6h) is executed via connecting paths between the driving surface segments (E1..E8).

14. The picking system (1) according to claim 13, **characterized in that** the driving surface segments (E1..E8) are structurally separated from one another.

15. The picking system (1) according to claim 14, **characterized in that** multiple driving surface segments (E4..E8) are arranged vertically on top of one another in different levels.

16. The picking system (1) according to claim 15, **characterized in that** there are different temperatures at least in a part of the driving surface segments (E4..E8) and there is a lower temperature on a bottom driving surface segment (E4..E8) than on a top driving surface segment (E4..E8).

17. The picking system (1) according to one of claims 14 to 16, **characterized in that** multiple driving surface segments (E1..E3) are structurally separated from one another by walls (13).

18. The picking system (1) according to one of claims 13 to 17, **characterized in that** a short-term intermediate storage area (15a, 15b) is arranged in the region of a driving surface segment (E4..E8).

19. The picking system (1) according to claim 18, **characterized in that** multiple driving surface segments (E4..E8) are structurally separated from one another by storage racks (7), wherein the storage racks (7) are comprised by the short-term intermediate storage area (15a) or form the same and wherein the storage racks (7) are accessible from an adjacent driving surface segment (E4..E8).

20. The picking system (1) according to claim 18, **characterized in that** multiple driving surface segments (E4..E8) are structurally separated from one another by storage racks (7), wherein the storage racks (7) are comprised by the short-term intermediate storage area (15a) or form the same and wherein the storage racks (7) are accessible from multiple adjacent driving surface segments (E4..E8).

21. The picking system (1) according to one of claims 13 to 20, **characterized in that**
the storage zone (B1..B7) comprises storage racks (7),
storage areas (C) are provided in the storage racks (7), and
a rail guided storage and retrieval unit (8) is provided, wherein the storage areas (C) in the storage racks (7) are accessible by the storage and retrieval unit (8), and wherein the storage conveying system (3) and/or the removal conveying system (4) comprises the storage and retrieval unit (8), and wherein a stationary storage transfer station (9) of a stationary part (3a) of the storage conveying system (3) is provided along the route of the storage conveying system (3) upstream of the storage and retrieval unit (8), wherein the stationary storage transfer station (9) is configured for transferring the goods (2a, 2b) from the autonomous conveying vehicles (5a, 5b) onto the stationary storage transfer station (9) and/or a stationary removal transfer station (11) of a stationary part (4a) of the removal conveying system (4) is provided along the route of the removal conveying system (4) downstream of the storage and retrieval unit (8), wherein the stationary removal transfer station (11) is configured for transferring the ordered goods (2c) from the removal transfer station (11) onto the autonomous conveying vehicles (5c..5e, 6a..6h).

22. The picking system (1) according to one of claims 13 to 21, **characterized in that** at least one workstation (12a, 12b) for picking the ordered goods (2c) into or onto dispatch goods carriers is arranged along the route of the removal conveying system (4).

23. The picking system (1) according to one of claims 13 to 22, **characterized in that** at least one provisional area for provisioning the goods (2a, 2b) on delivery containers and/or a separation device (9) for provisioning separated goods (2a) is arranged along the route of the storage conveying system (3).

## Revendications

1. Procédé pour le fonctionnement d'un système de préparation de commandes (1) pour préparer des marchandises (2a, 2b), comprenant les étapes suivantes :
Transport des marchandises (2a, 2b) d'une zone de réception des marchandises (A1) vers une zone de stockage (B1..B7), et stockage des marchandises dans cette zone de stockage (B1..B7) via un système de convoyage d'entrée (3), la zone de stockage (B1..B7) présentant une pluralité d'emplacements de stockage (C) pour stocker les marchandises (2a, 2b),
saisie d'un ordre de préparation et détermination des marchandises commandées (2c) nécessaires pour l'ordre de préparation par un ordinateur de commande, et
prélèvement des marchandises commandées (2c) de la zone de stockage (B1..B7) et
transport des marchandises commandées (2c) de la zone de stockage (B1..B7) vers une zone de transfert de marchandises (D1, D2) au moyen d'un système de convoyage de sortie (4),
le transport des marchandises (2a, 2b) au moyen du système de convoyage d'entrée (3) et/ou le transport des marchandises commandées (2c) au moyen du système de convoyage de sortie (4) étant effectués au moins en partie par une pluralité de véhicules de manutention autonomes (5a..51, 6a..6h) qui se déplacent sur une surface de circulation,
les mouvements de déplacement des véhicules de manutention autonomes (5a..51, 6a..6h) s'effectuant dans des segments de surface de circulation (E1..E8) qui divisent la surface de circulation, principalement par un groupe fermé de véhicules de manutention autonomes (5a..51, 6a..6h), et
les mouvements de déplacement dans les segments de surface de circulation (E1..E8) étant coordonnés par une commande (28), **caractérisé en ce que** les véhicules de manutention autonomes (5a..51, 6a..6h) non utilisés dans un groupe sont mis à la disposition d'un autre groupe dans le cadre d'un échange de véhicules de manutention autonomes (5a..51, 6a..6h) dans lequel il y a un passage étroit de véhicules de manutention autonomes (5a..51, 6a..6h),
l'échange de véhicules de manutention autonomes (5a..51, 6a..6h) entre deux segments de surface de circulation (E1..E8) différents concernant au maximum 10 % des déplacements effectués sur la surface de circulation, et
l'échange de véhicules de manutention autonomes (5a..51, 6a..6h) s'effectuant par des voies de liaison entre les segments de surface de circulation (E1..E8).

2. Procédé selon la revendication 1, **caractérisé en ce qu'**il règne des températures différentes dans les différents segments de surface de circulation (E1..E8).

3. Procédé selon l'une des revendications 1 ou 2, **caractérisé en ce que** les véhicules de manutention autonomes (5a, 5b) qui opèrent dans un premier segment de surface de circulation (E1) sont d'un premier type de construction et les véhicules de manutention autonomes (6a..6c) qui opèrent dans un deuxième segment de surface de circulation (E2) sont d'un deuxième type de construction différent.

4. Procédé selon l'une des revendications 1 à 3, **caractérisé en ce que** les véhicules de manutention autonomes (5a, 5b) qui opèrent dans un premier segment de surface de circulation (E1) opèrent à une première vitesse maximale et les véhicules de manutention autonomes (6a..6c) qui opèrent dans un deuxième segment de surface de circulation (E2) opèrent à une deuxième vitesse maximale différente.

5. Procédé selon l'une des revendications 1 à 4, **caractérisé en ce qu'**un premier segment de surface de circulation (E1) est libre d'accès pour les personnes lors du fonctionnement normal du système de préparation de commandes (1) et qu'un deuxième segment de surface de circulation (E2) est interdit d'accès aux personnes lors du fonctionnement normal du système de préparation de commandes (1).

6. Procédé selon l'une des revendications 1 à 5, **caractérisé en ce que** les marchandises (2a, 2b) sont stockées individuellement dans une première zone de stockage (B1) et stockées en groupes dans une deuxième zone de stockage (B2).

7. Procédé selon la revendication 6, **caractérisé en ce que** les marchandises/marchandises commandées (2a..2c) sont transportées par les véhicules de manutention autonomes (5c..5e, 6d..6h) dans un segment de surface de circulation (E3) aussi bien individuellement qu'en groupes.

8. Procédé selon la revendication 6, **caractérisé en ce que** les marchandises/marchandises commandées (2a..2c) sont transportées par les véhicules de manutention autonomes (5a, 5b) dans un premier segment de surface de circulation (E1) uniquement en groupes et dans un deuxième segment de surface de circulation (E2) uniquement de manière individuelle.

9. Procédé selon l'une des revendications 1 à 8, **caractérisé en ce qu'**un rapport entre un nombre de véhicules de manutention autonomes (5c..5e, 6d..6h) se trouvant sur un segment de surface de circulation (E1..E8) et un nombre de points de transfert sur ce segment de surface de circulation (E1..E8), qui représentent des interfaces entre les véhicules de manutention autonomes (5c..5e, 6d..6h) et un système de convoyage fixe (3a, 4a) ou une zone de stockage (B1..B7), est inférieur à 5.

10. Procédé selon l'une des revendications 1 à 9, **caractérisé en ce que** les segments de surface de circulation (E1..E8) sont mis hors service ou mis en service en fonction des besoins en capacité du système de préparation de commandes (1).

11. Procédé selon la revendication 10, **caractérisé en ce**
**qu'**un premier segment de surface de circulation (E1..E8) est mis hors service avant un deuxième segment de surface de circulation (E1..E8) lorsqu'un trajet de transport s'étendant entre un emplacement de stockage (C) et un point de transfert dans le premier segment de surface de circulation (E1..E8) sur un système de convoyage fixe (3a, 4a) est plus long qu'un trajet de transport entre cet emplacement de stockage (C) et un point de transfert dans le deuxième segment de surface de circulation (E1..E8) sur le système de convoyage fixe (3a, 4a), et/ou
un premier segment de surface de circulation (E1..E8) est mis en service après un deuxième segment de surface de circulation (E1..E8) lorsqu'un trajet de transport entre un emplacement de stockage (C) et un point de transfert dans le premier segment de surface de circulation (E1..E8) sur un système de convoyage fixe (3a, 4a) est plus long qu'un trajet de transport entre cet emplacement de stockage (C) et un point de transfert dans le deuxième segment de surface de circulation (E1..E8) sur le système de convoyage fixe (3a, 4a).

12. Procédé selon l'une des revendications 1 à 11, **caractérisé en ce que** la vitesse de déplacement des véhicules de manutention autonomes (5a..51, 6a..6h) dans un segment de surface de circulation (E1..E8) dans lequel une perturbation est présente est réduite par rapport au fonctionnement normal ou que les véhicules de manutention autonomes (5a..51, 6a..6h) y sont immobilisés, et **en ce que** le fonctionnement normal est maintenu dans les segments de surface de circulation (E1..E8) dans lesquels il n'y a pas de perturbation.

13. Système de préparation de commandes (1) pour préparer des marchandises (2a, 2b), comprenant
une zone de réception des marchandises (A1) et une zone de transfert des marchandises (D1, D2), une zone de stockage (B1..B7) avec une pluralité d'emplacements de stockage (C) pour stocker les marchandises (2a, 2b),
un système de convoyage d'entrée (3) reliant la zone de réception des marchandises (A1) et la zone de stockage (B1..B7), qui est conçu pour transporter les marchandises (2a, 2b) de la zone de réception des marchandises (A1) vers la zone de stockage (B1..B7) et pour stocker les marchandises (2a, 2b) dans la zone de stockage (B1..B7),
un ordinateur de commande pour enregistrer un ordre de préparation et pour déterminer les marchandises commandées (2c) qui sont nécessaires pour la commande de marchandises à préparer, et
un système de convoyage de sortie (4) reliant la zone de stockage (B1..B7) et la zone de transfert de marchandises (D1, D2) qui est conçu pour prélever les marchandises commandées (2c) de la zone de stockage (B1..B7) et pour transporter les marchandises commandées (2c) de la zone de stockage (B1..B7) vers la zone de transfert de marchandises (D1, D2),
le système de convoyage d'entrée (3) et/ou le système de convoyage de sortie (4) présentant une pluralité de véhicules de manutention autonomes (5a..51, 6a..6h) destinés au transport des marchandises (2a, 2b) / marchandises commandées (2c) sur une surface de circulation,
la surface de circulation étant divisée en plusieurs segments de surface de circulation (E1..E8) et une commande (28) étant prévue, qui est destinée à coordonner les mouvements de déplacement des véhicules de manutention autonomes (5a..51, 6a..6h) dans les segments de surface de circulation (E1..E8), et
les mouvements de déplacement dans les segments de surface de circulation (E1..E8) étant effectués principalement par un groupe fermé de véhicules de manutention autonomes (5a..51, 6a..6h),
**caractérisé en ce que**
les véhicules de manutention autonomes (5a..51, 6a..6h) non utilisés dans un groupe sont mis à la disposition d'un autre groupe dans le cadre d'un échange de véhicules de manutention autonomes (5a..51, 6a..6h), dans lequel il existe un passage étroit au niveau des véhicules de manutention autonomes (5a..51, 6a..6h),
l'échange de véhicules de manutention autonomes (5a..51, 6a..6h) entre deux segments de surface de circulation différents concernant au maximum 10 % des déplacements effectués sur la surface de circulation, et
dans lequel l'échange de véhicules de manutention autonomes (5a..51, 6a..6h) s'effectue par des voies de liaison entre les segments de surface de circulation (E1..E8).

14. Système de préparation de commandes (1) selon la revendication 13, **caractérisé en ce que** les segments de surface de circulation (E1..E8) sont séparés les uns des autres sur le plan structurel.

15. Système de préparation de commandes (1) selon la revendication 14, **caractérisé en ce que** plusieurs segments de surface de circulation (E4..E8) sont disposés verticalement les uns au-dessus des autres à différents niveaux.

16. Système de préparation de commandes (1) selon la revendication 15, **caractérisé en ce qu'**il règne des températures différentes, au moins, dans une partie des segments de surface de circulation (E4..E8) et qu'une température plus basse règne sur un segment de surface de circulation inférieur (E4..E8) que sur un segment de surface de circulation supérieur (E4..E8).

17. Système de préparation de commandes (1) selon les revendications 14 à 16, **caractérisé en ce que** plusieurs segments de surface de circulation (E1..E3) sont séparés les uns des autres par des parois (13).

18. Système de préparation de commandes (1) selon l'une des revendications 13 à 17, **caractérisé en ce qu'**un entrepôt intermédiaire/tampon (15a, 15b) de courte durée est agencé dans la zone d'un segment de surface de circulation (E4..E8).

19. Système de préparation de commandes (1) selon la revendication 18, **caractérisé en ce que** plusieurs segments de surface de circulation (E4..E8) sont séparés les uns des autres par des rayonnages (7), les rayonnages (7) étant entourés par l'entrepôt intermédiaire/tampon de courte durée (15a) ou formant celui-ci, et les rayonnages (7) étant accessibles depuis un segment de surface de circulation adjacent (E4..E8).

20. Système de préparation de commandes (1) selon la revendication 18, **caractérisé en ce que** plusieurs segments de surface de circulation (E4..E8) sont séparés les uns des autres par des rayonnages (7), les rayonnages (7) étant entourés par l'entrepôt intermédiaire/tampon de courte durée (15a) ou formant celui-ci, et les rayonnages (7) étant accessibles depuis plusieurs segments de surface de circulation adjacents (E4..E8).

21. Système de préparation de commandes (1) selon l'une des revendications 13 à 20, **caractérisé en ce que**
la zone de stockage (B1..B7) comprend des rayonnages (7),
des emplacements de stockage (C) sont prévus dans les rayonnages (7) et
un appareil de desserte des rayonnages (8) guidé sur rails est prévu, au moyen duquel les emplacements de stockage (C) dans les rayonnages (7) sont accessibles, le système de convoyage d'entrée (3) et/ou le système de convoyage de sortie (4) comprenant l'appareil de desserte des rayonnages (8), et dans lequel l'appareil de desserte des rayonnages (8) est précédé, dans le prolongement du système de convoyage d'entrée (3), d'un poste de transfert de stockage fixe (9) d'une partie fixe (3a) du système de convoyage d'entrée (3), qui est conçu pour transférer les marchandises (2a, 2b) des véhicules de manutention autonomes (5a, 5b) vers le poste de transfert de stockage fixe (9) et/ou l'appareil de desserte des rayonnages (8) est suivi, dans le parcours du système de convoyage de sortie (4), d'un poste de transfert de déstockage fixe (11) d'une partie fixe (4a) du système de convoyage de sortie (4), qui est conçue pour transférer les marchandises commandées (2c) du poste de transfert de sortie (11) vers les véhicules de manutention autonomes (5c..5e, 6a..6h).

22. Système de préparation de commandes (1) selon l'une des revendications 13 à 21, **caractérisé en ce qu'**au moins un poste de travail (12a, 12b) est disposé dans le parcours du système de convoyage de sortie (4) pour préparer les marchandises commandées (2c) dans ou sur des supports de marchandises à expédier.

23. Système de préparation de commandes (1) selon l'une des revendications 13 à 22, **caractérisé en ce qu'**au moins un emplacement de stockage pour la mise à disposition des marchandises (2a, 2b) sur des conteneurs de livraison et/ou un dispositif de séparation (9) pour la mise à disposition de marchandises séparées (2a) est disposé dans le parcours du système de convoyage d'entrée (3).
